(19) **Europäisches Patentamt / European Patent Office / Office européen des brevets**

(11) **EP 4 661 479 A1**

(12) **EUROPEAN PATENT APPLICATION**
published in accordance with Art. 153(4) EPC

(43) Date of publication:
**10.12.2025 Bulletin 2025/50**

(21) Application number: **24756119.4**

(22) Date of filing: **05.02.2024**

(51) International Patent Classification (IPC):
**H04W 24/10** (2009.01)

(52) Cooperative Patent Classification (CPC):
**H04L 1/00; H04L 1/06; H04L 5/00; H04W 24/02; H04W 24/10**

(86) International application number:
**PCT/CN2024/076089**

(87) International publication number:
**WO 2024/169745 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023  CN 202310156244**

(71) Applicant: **Huawei Technologies Co., Ltd.**
**Shenzhen, Guangdong 518129 (CN)**

(72) Inventors:
• **CHAI, Xiaomeng**
  **Shenzhen, Guangdong 518129 (CN)**
• **LI, Yuan**
  **Shenzhen, Guangdong 518129 (CN)**
• **SUN, Yan**
  **Shenzhen, Guangdong 518129 (CN)**
• **PANG, Jiyong**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD, APPARATUS, AND SYSTEM**

(57) A communication method, apparatus, and system are provided, and are applied to the field of communication technologies. The method includes: A second device sends indication information to a first device, where the indication information indicates a manner of determining a transmission parameter of a first transmission, or the indication information indicates that a manner of determining a transmission parameter of a first transmission is the same as a manner of determining a transmission parameter of a second transmission, and the manner of determining includes an artificial intelligence AI-based determining manner or a non-AI-based determining manner; and the second device determines, based on the indication information and at least one transmission from the second device, performance corresponding to the manner of determining of the transmission parameter of the first transmission, where the at least one transmission includes the first transmission and/or the second transmission. According to the foregoing method, performance of artificial intelligence can be monitored.

FIG. 7

**Description**

CROSS-REFERENCE TO RELATED APPLICATIONS

This application claims priority to Chinese Patent Application No. 202310156244.8, filed with the China National Intellectual Property Administration on February 16, 2023 and entitled "COMMUNICATION METHOD AND APPARATUS", which is incorporated herein by reference in its entirety.

TECHNICAL FIELD

This application relates to the field of communication technologies, and in particular, to a communication method, apparatus, and system.

BACKGROUND

In wireless communication networks, for example in mobile communication networks, services supported by the network are becoming increasingly diverse, and therefore the requirements that need to be met are also becoming increasingly varied. For example, networks need to be able to support ultra-high data rates, ultra-low latency, and/or massive connectivity. These characteristics make network planning, network configuration, and/or resource scheduling ever more complex. These new requirements, new scenarios, and new features bring unprecedented challenges to network planning, maintenance, and efficient operation. To address these challenges, artificial intelligence technologies can be introduced into wireless communication networks to achieve network intelligence. For instance, one specific application of introducing artificial intelligence technologies into wireless communication networks is using artificial intelligence (artificial intelligence, AI) models for channel state information (channel state information, CSI) feedback.

In the context of introducing artificial intelligence into wireless communication networks, model monitoring is required to monitor performance of the AI model. How to effectively implement artificial intelligence in the network, for example, how to monitor performance of artificial intelligence, is a problem worth studying currently.

SUMMARY

This application provides a communication method, apparatus, and system, to monitor performance of artificial intelligence.

According to a first aspect, a communication method is provided, applied to a first device. For a downlink transmission, the first device is a terminal side apparatus, and a second device is a network side apparatus. For an uplink transmission, the first device is the network side apparatus, and the second device is the terminal side apparatus. The terminal side apparatus in this application may be a terminal device, or a chip, a unit, or a module in the terminal device. The terminal side apparatus may alternatively be a communication apparatus having a terminal device function, or a chip, a unit, or a module in a communication apparatus having a terminal device function. The network side apparatus in this application may be a network device, or a chip, a unit, or a module in the network device. The network side apparatus may alternatively be a communication apparatus having a network device function, or a chip, a unit, or a module in a communication apparatus having a network device function.

The method includes: The first device receives indication information from the second device, where the indication information indicates a manner of determining a transmission parameter of a first transmission, or the indication information indicates that a manner of determining a transmission parameter of a first transmission is the same as a manner of determining a transmission parameter of a second transmission, and the determining manner includes an AI-based determining manner or a non-AI-based determining manner. The first device determines, based on the indication information and at least one transmission from the second device, performance corresponding to the manner of determining of the transmission parameter of the first transmission, where the at least one transmission includes the first transmission and/or the second transmission.

The second device sends the manner of determining of the transmission parameter of the first transmission to the first device by using the indication information, so that the first device can learn of the manner of determining of the transmission parameter of the first transmission, and can further determine, for the determining manner based on a reception status of the transmission, the performance corresponding to the determining manner, thereby implementing model monitoring. Based on a model monitoring result, related measures can be taken to improve system performance. A CSI feedback scenario is used as an example. Based on the foregoing procedure, after obtaining the model monitoring result, the first device may compare performance corresponding to an AI-based CSI feedback manner and performance corresponding to a non-AI-based CSI feedback manner, to monitor an AI model. For example, the performance corresponding to the AI model-based CSI feedback manner is compared with the performance corresponding to the non-AI-based CSI feedback manner. If the performance corresponding to the AI model-based CSI feedback manner is better, it indicates that the performance of the AI model meets a requirement. Otherwise, it indicates that the performance of the AI model does not meet the requirement, and an operation such as CSI feedback manner switching, or AI model replacement or update may be performed.

In a possible implementation, the transmission parameter includes one or more of precoding, a beam, a modulation and coding scheme (modulation and coding scheme, MCS), a quantity of transport streams, and resource allocation.

In a possible implementation, the manner of determining of the transmission parameter of the first transmission is different from the manner of determining of the transmission parameter of the second transmission. In other words, for multiple transmissions that have an association relationship, determining manners of transmission parameters of the multiple transmissions are different.

In a possible implementation, the AI-based determining manner includes at least a first AI model-based determining manner and a second AI model-based determining manner. In this implementation, the AI-based determining manner may be further subdivided into determining manners based on different AI models, so that more refined model monitoring can be implemented.

Optionally, a function of a first AI model is the same as a function of a second AI model. For example, both the first AI model and the second AI model are used to determine CSI feedback information. For another example, both the first AI model and the second AI model are used to perform beam prediction. Structures of the first AI model and the second AI model are different. For example, depths (a quantity of layers) and/or widths (a quantity of neurons) of neural networks are different. Alternatively, coefficients of the first AI model and the second AI model are different. Alternatively, the structures and the coefficients of the first AI model and the second AI model are different.

In a possible implementation, the AI-based determining manner includes one of the following: an AI-based CSI feedback manner, an AI-based CSI compression manner, an AI-based CSI reconstruction manner, an AI-based CSI prediction manner, and an AI-based beam prediction manner. The non-AI-based determining manner includes one of the following: a non-AI-based CSI feedback manner, a non-AI-based CSI compression manner, a non-AI-based CSI reconstruction manner, a non-AI-based CSI prediction manner, and a non-AI-based beam prediction manner.

In a possible implementation, the first transmission includes one transmission, multiple transmissions, or a transmission within a first time period. In this way, determining manners of transmission parameters of the multiple transmissions may be indicated by using the indication information.

Optionally, if the first transmission includes multiple transmissions, the indication information indicates a manner of determining a transmission parameter of each of the multiple transmissions.

In a possible implementation, the receiving the indication information from the second device includes: receiving downlink control information from the second device, where the downlink control information indicates the manner of determining of the transmission parameter of the first transmission, and the first transmission is a transmission scheduled by using the downlink control information; or receiving higher layer signaling from the second device, where the higher layer signaling indicates the manner of determining of the transmission parameter of the first transmission.

In a possible implementation, the indication information indicates a first transmission pattern including a first determining manner corresponding to N transmissions, the N transmissions include the first transmission, the first determining manner is the manner of determining of the transmission parameter of the first transmission, and N is a positive integer.

The N transmissions may include N1 transmissions and N2 transmissions. When N1 is greater than 1, the N1 transmissions may be N1 consecutive transmissions. When N2 is greater than 1, the N2 transmissions may be N2 consecutive transmissions. The first transmission pattern may indicate only a transmission quantity of the N1 transmissions and indicate the first determining manner corresponding to the transmission quantity. Similarly, the first transmission pattern may indicate only a transmission quantity of the N2 transmissions and indicate a second determining manner corresponding to the transmission quantity. In this way, signaling overheads can be reduced when the first transmission pattern is sent by using the first indication information. N, N1, and N2 are all positive integers.

In a possible implementation, the indication information indicates a second transmission pattern including a first determining manner corresponding to the transmission within the first time period, the transmission within the first time period includes the first transmission, and the first determining manner is the manner of determining of the transmission parameter of the first transmission.

The first time period may include one or more transmissions. When the first time period includes multiple transmissions, because the second transmission pattern may indicate a corresponding determining manner only for the first time period, signaling overheads can be reduced when the second transmission pattern is sent by using the first indication information.

In a possible implementation, the indication information includes index information of the manner of determining of the transmission parameter of the first transmission; or the indication information includes type information of the first transmission, and the manner of determining of the transmission parameter of the first transmission corresponds to a type of the first transmission.

Optionally, type division may be performed on the transmission from a perspective of whether the transmission is used for model monitoring and whether the transmission parameter is determined based on the AI model, so that the type of transmission can correspond to the manner of determining of the transmission parameter of the transmission.

In a possible implementation, the indication information includes indication information of the first transmission and indication information of the second transmission, or the indication information indicates transmission moments of the first transmission and the second transmission.

In a possible implementation, the indication information of the first transmission includes an index of the first transmission and/or time-frequency resource indication information of the first transmission; and the indication information of the second transmission includes an index of the second transmission and/or time-frequency resource indication information of the second transmission.

In a possible implementation, the determining, based on the indication information and the at least one transmission from the second device, the performance corresponding to the manner of determining of the transmission parameter of the first transmission includes: within each period after the indication information is received, determining, based on the indication information and the at least one transmission from the second device within the period, the performance corresponding to the manner of determining of the transmission parameter of the first transmission. Because the indication information may be periodic, signaling overheads can be reduced.

Optionally, the indication information may further indicate one or more of start time of the period, an end time of the period, or a duration of the period. It may be understood that one or more of the start time of the period, the end time of the period, or the duration of the period not indicated may be predefined, for example, protocol-predefined, or may be obtained based on indicated information and/or predefined information.

In a possible implementation, the method further includes: sending first information to the second device, where the first information includes the performance, or the first information indicates one or more of the following: performance of at least one determining manner in multiple determining manners; a determining manner corresponding to optimal performance in performance corresponding to multiple determining manners; a determining manner corresponding to performance higher than a threshold in the performance corresponding to the multiple determining manners; a determining manner corresponding to performance lower than the threshold in the performance corresponding to the multiple determining manners; and a determining manner recommended by the terminal device in the performance corresponding to the multiple determining manners. The multiple determining manners include a manner of determining a transmission parameter of each of the at least one transmission sent by the second device.

Optionally, the performance includes one or more of the following: a throughput, spectral efficiency, a transmission rate, a block error rate (block error rate, BLER), an assumed BLER, hybrid automatic repeat request (hybrid automatic repeat request, HARQ) acknowledged/unacknowledged (ACK/NACK), and a signal to interference plus noise ratio (signal to interference plus noise ratio, SINR), and a reference signal received power (reference signal received power, RSRP).

According to a second aspect, a communication method is provided, applied to a second device. For a downlink transmission, a first device is a terminal side apparatus, and the second device is a network side apparatus. For an uplink transmission, the first device is the network side apparatus, and the second device is the terminal side apparatus. The terminal side apparatus in this application may be a terminal device, or a chip, a unit, or a module in the terminal device. The terminal side apparatus may alternatively be a communication apparatus having a terminal device function, or a chip, a unit, or a module in a communication apparatus having a terminal device function. The network side apparatus in this application may be a network device, or a chip, a unit, or a module in the network device. The network side apparatus may alternatively be a communication apparatus having a network device function, or a chip, a unit, or a module in a communication apparatus having a network device function.

The method includes: The second device sends indication information to a first device, where the indication information indicates a manner of determining a transmission parameter of a first transmission, or the indication information indicates that a manner of determining a transmission parameter of a first transmission is the same as a manner of determining a transmission parameter of a second transmission, and the determining manner includes an AI-based determining manner or a non-AI-based determining manner. The second device sends at least one transmission to the first device, where the at least one transmission includes the first transmission and/or the second transmission.

In a possible implementation, the AI-based determining manner includes at least a first AI model-based determining manner and a second AI model-based determining manner.

In a possible implementation, the AI-based determining manner includes one of the following: an AI-based CSI feedback manner, an AI-based CSI compression manner, an AI-based CSI reconstruction manner, an AI-based CSI prediction manner, and an AI-based beam prediction manner. The non-AI-based determining manner includes one of the following: a non-AI-based CSI feedback manner, a non-AI-based CSI compression manner, a non-AI-based CSI reconstruction manner, a non-AI-based CSI prediction manner, and a non-AI-based beam prediction manner.

In a possible implementation, the first transmission includes one transmission, multiple transmissions, or a transmission within a first time period.

In a possible implementation, the sending the indication information to the first device includes: sending downlink control information to the first device, where the downlink control information indicates the manner of determining of the transmission parameter of the first transmission, and the first transmission is a transmission scheduled by using the downlink control information; or sending higher layer signaling to the first device, where the higher layer signaling indicates the manner of determining of the transmission parameter of the first transmission.

In a possible implementation, the indication information indicates a first transmission pattern including a first determining manner corresponding to N transmissions, the N transmissions include the first transmission, the first determining manner is the manner of determining of the transmission parameter of the first transmission, and N is a positive integer; or the indication information indicates a second transmission pattern including a first determining manner corresponding to the transmission within the first time period, the transmission within the first time period includes the first transmission, and the first determining manner is the manner of determining of the transmission parameter of the first transmission.

In a possible implementation, the indication information includes index information of the manner of determining of the transmission parameter of the first transmission; or the indication information includes type information of the first transmission, and the manner of determining of the transmission parameter of the first transmission corresponds to a type of the first transmission.

In a possible implementation, the indication information includes indication information of the first transmission and indication information of the second transmission, or the indication information indicates transmission moments of the first transmission and the second transmission.

In a possible implementation, the indication information of the first transmission includes an index of the first transmission and/or time-frequency resource indication information of the first transmission; and the indication information of the second transmission includes an index of the second transmission and/or time-frequency resource indication information of the second transmission.

In a possible implementation, after sending the at least one transmission to the first device, the method further includes: receiving first information from the first device, where the first information includes the performance that corresponds to the manner of determining of the transmission parameter of the first transmission and that is determined by the first device based on the indication information and the at least one transmission sent by the second device, or the first information indicates one or more of the following: performance of at least one determining manner in multiple determining manners; a determining manner corresponding to optimal performance in performance corresponding to multiple determining manners; a determining manner corresponding to performance higher than a threshold in the performance corresponding to the multiple determining manners; a determining manner corresponding to performance lower than the threshold in the performance corresponding to the multiple determining manners; and a determining manner recommended by the terminal device in the performance corresponding to the multiple determining manners, where the multiple determining manners include a manner of determining a transmission parameter of each of the at least one transmission sent by the second device.

In a possible implementation, the first device is a terminal device, the second device is a network device, and the first transmission is a downlink transmission; or the first device is a network device, the second device is a terminal device, and the first transmission is an uplink transmission.

According to a third aspect, a communication apparatus is provided. The communication apparatus may implement functions implemented by the first device in the first aspect. The communication apparatus includes a processing unit and a transceiver unit. The transceiver unit is configured to receive indication information from the second device, where the indication information indicates a manner of determining a transmission parameter of a first transmission, or the indication information indicates that a manner of determining a transmission parameter of a first transmission is the same as a manner of determining a transmission parameter of a second transmission, and the determining manner includes an AI-based determining manner or a non-AI-based determining manner. The processing unit is configured to determine, based on the indication information and at least one transmission from the second device, performance corresponding to the manner of determining of the transmission parameter of the first transmission, where the at least one transmission includes the first transmission and/or the second transmission.

According to a fourth aspect, a communication apparatus is provided. The communication apparatus may implement functions implemented by the second device in the second aspect. The communication apparatus includes a processing unit and a transceiver unit. The processing unit is configured to send indication information to a first device by using the transceiver unit, where the indication information indicates a manner of determining a transmission parameter of a first transmission, or the indication information indicates that a manner of determining a transmission parameter of a first transmission is the same as a manner of determining a transmission parameter of a second transmission, and the determining manner includes an AI-based determining manner or a non-AI-based determining manner; and send at least one transmission to the first device by using the transceiver unit, where the at least one downlink transmission includes the first transmission and/or the second transmission.

According to a fifth aspect, a communication apparatus is provided, including one or more processors and one or more memories. The one or more memories store one or more programs. When the program is executed by the one or more processors, the communication apparatus is caused to perform the method according to any one of the first aspect or the method according to any one of the second aspect.

According to a sixth aspect, a communication method is provided. The communication method includes: A second device sends indication information to a first device, where the indication information indicates a manner of determining a transmission parameter of a first transmission, or the indication information indicates that a manner of determining a transmission parameter of a first transmission is the same as a manner of determining a transmission parameter of a second transmission. The second device sends at least one transmission to the first device, where the at least one transmission includes the first transmission and/or the second transmission. The first device determines, based on the indication information and the at least one transmission from the second device, performance corresponding to the manner of determining of the transmission parameter of the first transmission.

For a downlink transmission, a first device is a terminal side apparatus, and the second device is a network side apparatus. For an uplink transmission, the first device is the network side apparatus, and the second device is the terminal side apparatus. The terminal side apparatus in this application may be a terminal device, or a chip, a unit, or a module in the terminal device. The terminal side apparatus may alternatively be a communication apparatus having a terminal device function, or a chip, a unit, or a module in a communication apparatus having a terminal device function. The network side apparatus in this application may be a network device, or a chip, a unit, or a module in the network device. The network side apparatus may alternatively be a communication apparatus having a network device function, or a chip, a unit, or a module in a communication apparatus having a network device function.

According to a seventh aspect, a communication system is provided. The system includes a first device configured to perform the method according to any one of the first aspect, and a second device configured to perform the method according to any one of the second aspect.

According to an eighth aspect, a chip system is provided. The chip system includes at least one chip and a memory, and the at least one chip is configured to read and execute a program stored in the memory, to implement the method according to any one of the first aspect or the method according to any one of the second aspect.

According to a ninth aspect, a readable storage medium is provided. The readable storage medium includes a program. When the program is run on an apparatus, the apparatus is caused to perform the method according to any one of the first aspect or the method according to any one of the second aspect.

According to a tenth aspect, a program product is provided. When the program product runs on an apparatus, the apparatus is caused to perform the method according to any one of the first aspect or the method according to any one of the second aspect.

For effect of the solution provided in any one of the second aspect to the tenth aspect, refer to corresponding descriptions in the first aspect.

## BRIEF DESCRIPTION OF DRAWINGS

FIG. 1 is a diagram of an architecture of a communication system to which an embodiment of this application is applied;
FIG. 2 is a diagram of a neuron structure according to an embodiment of this application;
FIG. 3 is a diagram of a layer relationship of a neural network according to an embodiment of this application;
FIG. 4 is a diagram of an AI application framework according to an embodiment of this application;
FIG. 5a is a diagram of a structure of another communication system to which an embodiment of this application is applied;
FIG. 5b is a diagram of a structure of another communication system to which an embodiment of this application is applied;
FIG. 6 is a diagram of a CSI feedback framework according to an embodiment of this application;
FIG. 7 is a schematic flowchart of a communication method according to an embodiment of this application;
FIG. 8a is a diagram of a downlink transmission pattern according to an embodiment of this application;
FIG. 8b is a diagram of another downlink transmission pattern according to an embodiment of this application;
FIG. 9a is a diagram of effective time of indication information according to an embodiment of this application;
FIG. 9b is a diagram of other effective time of indication information according to an embodiment of this application;
FIG. 9c is a diagram of other effective time of indication information according to an embodiment of this application;
FIG. 10 is a schematic flowchart of another communication method according to an embodiment of this application;
FIG. 11 is a schematic flowchart of a communication method in a CSI feedback scenario according to an embodiment of this application;
FIG. 12 is a schematic flowchart of a communication method in a CSI prediction scenario according to an embodiment of this application;

FIG. 13 is a schematic flowchart of a communication method in a beam prediction scenario according to an embodiment of this application;

FIG. 14 is a diagram of a communication apparatus according to an embodiment of this application; and

FIG. 15 is a diagram of another communication apparatus according to an embodiment of this application.

DESCRIPTION OF EMBODIMENTS

To make the objectives, technical solutions, and advantages of this application clearer, the following further describes this application in detail with reference to the accompanying drawings.

"At least one piece (item)" described in this application below indicates one piece (item) or more pieces (items). "Multiple (items)" means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms first, second, and the like may be used in this application to describe objects, these objects are not limited by these terms. These terms are merely used to distinguish the objects from each other.

The terms "including", "having", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this application, terms such as "example" or "for example" are used to represent giving an example, an illustration, or a description. Any method or design solution described in this application as "example" or "for example" should not be explained as being more preferred or advantageous over another method or design solution. To be precise, the term "example", "for example", or the like is intended to present a related concept in a specific manner.

The technical solutions provided in this application may be used in various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of multiple systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In this application, the network element is used as an example for description. For example, the communication system may include at least one terminal device and at least one network device. The network device may send a downlink signal to the terminal device, and/or the terminal device may send an uplink signal to the network device. It may be understood that the terminal device in this application may be replaced with a first network element, the network device may be replaced with a second network element, and the terminal device and the network device perform a corresponding communication method in this application.

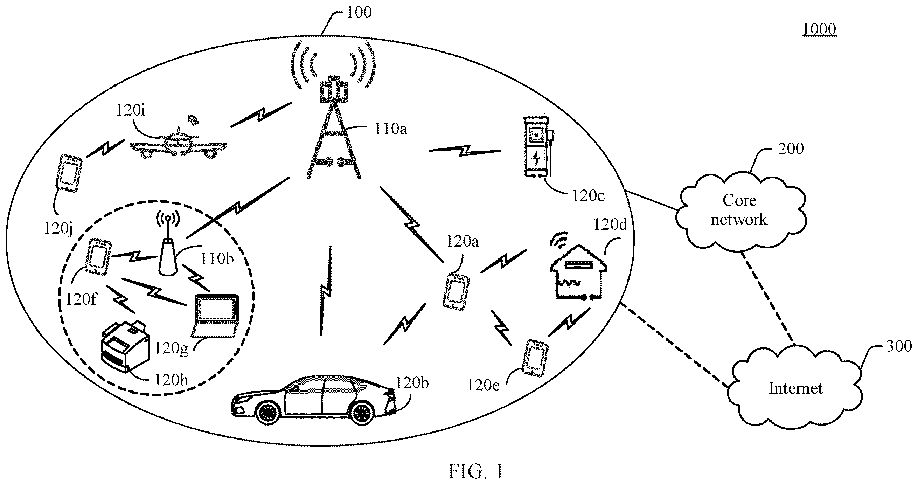

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely an example diagram. The communication system may further include other network devices, for example, may further include a wireless relay device and a wireless backhaul device, which are not shown in FIG. 1.

The radio access network device may be a base station (base station, BS), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part of or all functions of a physical layer. For specific descriptions of the foregoing protocol layers, refer to related technical specifications of the 3rd generation partnership project (3rd generation partnership project, 3GPP). The base station including a CU and a DU may also be referred to as a base station with a CU and a DU that are separated. For example, the base station includes a gNB-CU and a gNB-DU. The CU may be further separated into a CU control plane (CU control plane, CU-CP) and a CU user plane (CU user plane, CU-CP). For example, the base station includes a gNB-CU-CP, a gNB-CU-UP, and a gNB-DU. The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the network device is a radio access network device.

The terminal may also be referred to as a terminal device, user equipment (user equipment, UE), a mobile station, a mobile terminal, or the like, and may be a device having a wireless transceiver function. The terminal may be deployed on land, including an indoor device, an outdoor device, a handheld device, a wearable device, or a computing device and/or a vehicle-mounted device, may be deployed on a water surface (for example, on a ship), or may be deployed in air (for example, on an airplane, a balloon, or a satellite). The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, a smart grid, smart furniture, smart office, smart wearable, smart transportation, and a smart city. For example, the terminal may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. A specific technology and a specific device form used for the terminal are not limited in embodiments of this application.

The network device and the terminal may be at a fixed location or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For a terminal 120j that accesses the radio access network 100 via 120i, the uncrewed aerial vehicle 120i is a network device. However, for a network device 110a, 120i is a terminal, that is, 110a and 120i communicate with each other according to a radio air interface protocol. Certainly, 110a and 120i may alternatively communicate with each other according to an interface protocol between network devices. In this case, compared with 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

The network device and/or the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application. In addition, each of the terminal device and the network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum of 6 GHz or below and a spectrum of 6 GHz or above. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. A function of the terminal may be performed by a module (for example, a chip or a modem) in the terminal, or may be performed by an apparatus including the function of the terminal.

In embodiments of this application, the network device sends a downlink signal or downlink information to the terminal. The downlink information is carried on a downlink channel. The terminal sends an uplink signal or uplink information to the base station. The uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

It should be understood that a quantity and types of devices in the communication system shown in FIG. 1 are merely used as an example, and this application is not limited thereto. In actual application, the communication system may further include more terminal devices and more access network devices, and may further include another network element, for example, may include a core network device, a network manager, and/or a network element configured to implement an artificial intelligence function.

The method provided in this application relates to AI. For ease of understanding, the following describes some terms of AI in this application. It may be understood that the description is not intended to limit this application.

(1) Artificial intelligence and machine learning

The artificial intelligence (artificial intelligence, AI) refers to intelligence represented by machines made by humans. Generally, the artificial intelligence is a technology that presents human intelligence by using a normal computer program. The artificial intelligence may be defined as a machine or computer that mimics humans and has cognitive functions related to human thinking, such as learning and resolving problems. The artificial intelligence can learn from past experience, make reasonable decisions, and respond quickly. An objective of the artificial intelligence is to understand intelligence by building symbolic reasoning or computer programs for reasoning.

The machine learning is a way to implement artificial intelligence, that is, to resolve problems in the artificial intelligence by using the machine learning as a means. A machine learning theory is mainly to design and analyze some algorithms that enable a computer to automatically "learn". A machine learning algorithm is an algorithm that automatically analyzes data to obtain a rule and uses the rule to predict unknown data. Because the learning algorithm involves a large quantity of statistical theories, the machine learning is closely related to inferential statistics and is also referred to as statistical learning theory.

(2) AI model and neural network

The AI model is a specific implementation of an AI technology function. The AI model indicates a mapping relationship between an input and an output of the model. The AI model may be a neural network, a linear regression model, a decision tree model, a support vector machine (support vector machine, SVM), a Bayesian network, a Q-learning model, or another machine learning (machine learning, ML) model.

The neural network (neural network, NN) is a specific implementation form of an AI or machine learning technology. According to a universal approximation theorem, the neural network can theoretically approximate any continuous function, so that the neural network has a capability of learning any mapping. Therefore, the neural network can accurately perform abstract modeling for a complex high-dimension problem.

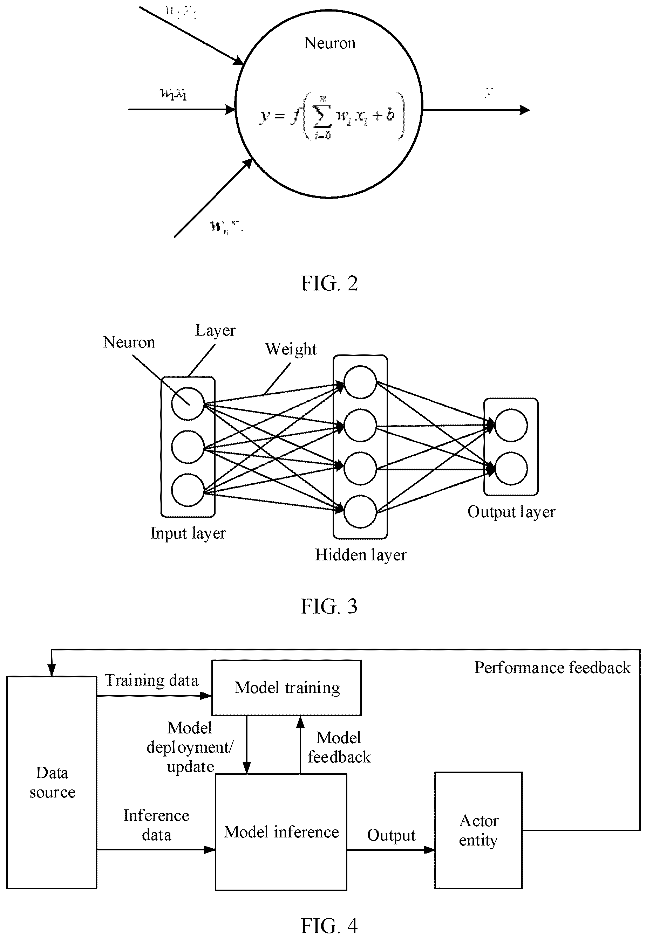

The idea of the neural network comes from the neuron structure of brain tissue. For example, each neuron performs a weighted summation operation on input values of the neuron, and outputs a weighted summation result as an operation result by using an activation function. FIG. 2 is a diagram of a neuron structure. It is assumed that inputs of a neuron are $x = [x_0, x_1, ..., x_n]$, and weights corresponding to the inputs are respectively $w = [w_0, w_1, ..., w_n]$, where $w_i$ is used as a weight of $x_i$ and is used to weight $x_i$. An offset for performing weighted summation on the input values based on the weights is, for example, b. There may be multiple forms of an activation function. It is assumed that an activation function of a neuron is:

$$y = f(c) = \max(0, c) \quad \dots\dots\dots\dots\dots(1)$$

An output of the neuron is:

$$y = f\left(\sum_{i=0}^{i=n} w_i * x_i + b\right) = \max\left(0, \sum_{i=0}^{i=n} w_i * x_i + b\right) \quad \dots\dots\dots\dots\dots(2)$$

For another example, an activation function of a neuron is:

$$y = f(c) = c \quad \dots\dots\dots\dots\dots(3)$$

An output of the neuron is:

$$y = f\left(\sum_{i=0}^{i=n} w_i * x_i + b\right) = \sum_{i=0}^{i=n} w_i * x_i + b \quad \dots\dots\dots\dots\dots(4)$$

Herein, $b$, $w_i$, and $x_i$ may be various possible values such as a decimal, an integer (for example, 0, a positive integer, or a negative integer), or a complex number. Activation functions of different neurons in a neural network may be the same or different.

The neural network usually includes multiple layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to FIG. 3. The input layer of the neural network performs neuron processing on received input information, and transfers a processing result to the intermediate hidden layer. The hidden layer performs calculation on the received processing result to obtain a calculation result. The hidden layer transfers the calculation result to the output layer or an adjacent hidden layer. Finally, the output layer obtains an output result of the neural network. One neural network may include one hidden layer, or include multiple hidden layers that are sequentially connected. This is not limited.

A loss function may be defined in a training process of the AI model (for example, a neural network). The loss function describes a gap or a difference between an output value of the AI model and an ideal target value. A specific form of the loss function is not limited in embodiments of this application. The training process of the AI model is a process in which a model parameter of the AI model is adjusted, so that a value of the loss function is less than a threshold, or a value of the loss function meets a target requirement. For example, the AI model is a neural network, and adjusting a model parameter of the AI model includes adjusting at least one of the following parameters: a quantity of layers and a width of the neural network, a weight of a neuron, or a parameter in an activation function of the neuron.

The inference data may be used as an input of a trained AI model and used for inference by the AI model. During model inference, the inference data is input into the AI model, to obtain a corresponding output, namely, an inference result.

(3) AI model design

The AI model design mainly includes a data collection stage (for example, collection of training data and/or inference data), a model training stage, and a model inference stage, and may further include an inference result application stage. FIG. 4 shows an AI application framework. At the data collection stage, a data source (data source) is used to provide a training dataset and inference data. At the model training stage, training data (training data) provided by the data source is analyzed or trained to obtain an AI model. Obtaining the AI model through learning by using a model training node is equivalent to obtaining a mapping relationship between an input and an output of the model through learning by using the training data. At the model inference stage, the AI model obtained through training at the model training stage is used to perform inference based on the inference data provided by the data source, to obtain an inference result. This stage can also be understood as follows: The inference data is input into the AI model, to obtain an output by using the AI model. The output is the inference result. The inference result may indicate a configuration parameter used (executed) by an actor object, and/or an operation performed by the actor object. The inference result is published at the inference result application stage. For example, the inference result may be planned by a same actor (actor) entity. For example, the actor entity may send the inference result to one or more actor objects (for example, a core network device, an access network device, a terminal device, or a network manager) for execution. For another example, the actor entity may further feed back performance of the model to the data source, to facilitate subsequent model updating and training.

It may be understood that a communication system may include a network element having an artificial intelligence function. The foregoing stages related to the AI model design may be performed by one or more network elements having the artificial intelligence function. In a possible design, an AI function (for example, an AI module or an AI entity) may be configured in an existing network element in the communication system, to implement an AI-related operation, for example, AI model training and/or inference. For example, the existing network element may be an access network device, a terminal device, a core network device, a network management system, or the like. In another possible design, an independent network element may alternatively be introduced into the communication system to perform an AI-related operation, for example, AI model training. The independent network element may be referred to as an AI entity, an AI node, or the like. The name is not limited in this application. The AI entity may be directly connected to an access network device in the communication system, or may be indirectly connected to the access network device via a third-party network element. The third-party network element may be a core-network network element, for example, an authentication management function (authentication management function, AMF) network element or a user plane function (user plane function, UPF) network element, a network manager, a cloud server, or another network element. This is not limited. For example, the independent AI network element may be deployed on one or more of a network device side, a terminal device side, or a core network side. Optionally, the independent AI network element may be deployed on a cloud-side server.

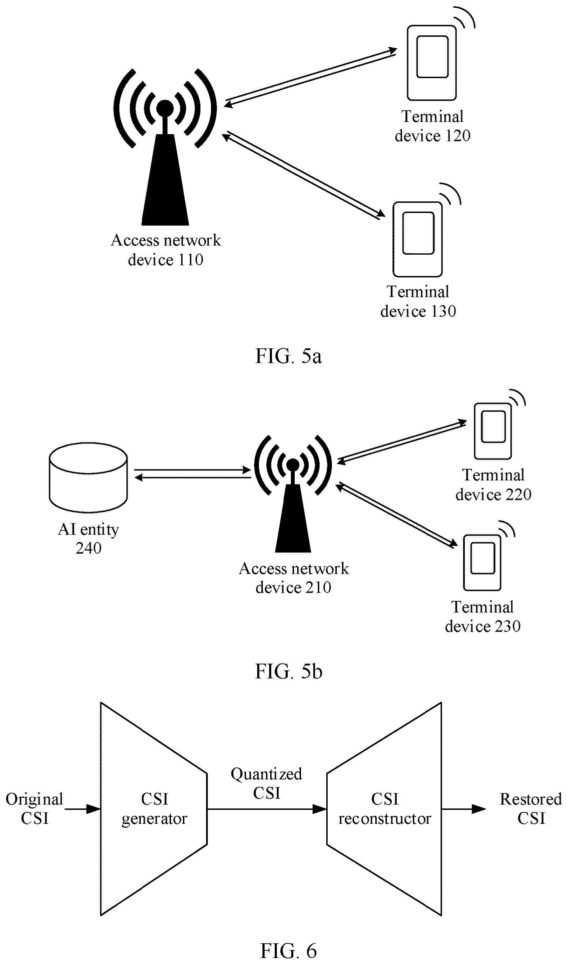

For example, FIG. 5a shows a communication system. The communication system includes an access network device 110, a terminal device 120, and a terminal device 130. The terminal devices 120 and 130 may access the access network device 110, and communicate with the access network device 110. An AI function (for example, a CSI reconstructor) may be configured in the access network device 110, and an AI function (for example, a CSI generator) may also be configured in the terminal device 130 and the terminal device 120.

FIG. 5b shows another communication system. The communication system includes an access network device 210, a terminal device 220, and a terminal device 230, and further includes an AI entity 240. The terminal device 220 and the terminal device 230 may access the access network device 210, and communicate with the access network device 210. The access network device 210 may forward, to the AI entity 240, data that is related to the AI model and that is reported by the terminal device 220 and the terminal device 230. The AI entity 240 performs AI-related operations such as training dataset construction and model training, and forwards outputs of the AI-related operations such as a trained neural network model, model evaluation, and a test result to the terminal devices via the access network device 210.

Some embodiments of this application relate to CSI feedback technologies. In the foregoing communication system, for example, an LTE or NR system, an access network device needs to obtain CSI of a channel. For example, CSI of a downlink channel is used. The access network device may determine, based on the CSI, configuration such as a resource, a modulation and coding scheme (modulation and coding scheme, MCS), and precoding for scheduling a downlink data channel of a terminal device. It may be understood that the CSI is channel information, and is information that can reflect a channel feature and channel quality. The channel information may also be referred to as a channel response. For example, the CSI may be represented by a channel matrix, for example, the CSI includes the channel matrix; or the CSI may include a channel eigenvector. In a frequency division duplex (frequency division duplex, FDD) communication scenario, because uplink and downlink channels do not have reciprocity or reciprocity between uplink and downlink channels cannot be ensured, the access network device usually sends a downlink reference signal to the terminal device. The terminal device performs channel measurement and interference measurement based on the received downlink reference signal, to estimate downlink channel information. The downlink channel information includes CSI. Then, the CSI is fed back to the access network device.

In a conventional CSI feedback manner, the terminal device may generate a CSI report based on the estimated CSI in a predefined manner or a manner configured by the access network device, and feed back the CSI report to the access network device. The downlink reference signal includes a channel state information-reference signal (channel state information-reference signal, CSI-RS) or a synchronization signal block (synchronization signal/physical broadcast channel block, SSB). The CSI report includes a feedback quantity, for example, a rank indicator (rank indicator, RI), a channel quality indicator (channel quality indicator, CQI), and a precoding matrix indicator (precoding matrix indicator, PMI). The RI indicates a quantity of downlink transport layers recommended by the terminal device, the CQI indicates a modulation and coding scheme that can be supported by a current channel condition determined by the terminal device, the PMI indicates precoding recommended by the terminal device, and a quantity of precoding layers indicated by the PMI corresponds to the RI.

The AI is introduced into the wireless communication network, and an AI-based CSI feedback manner is generated. As shown in FIG. 6, a CSI generator is deployed on a terminal device, and the CSI generator has compression and quantization functions. A CSI reconstructor is deployed on an access network device, and the CSI reconstructor has dequantization and decompression functions. Both the CSI generator and the CSI reconstructor are AI models. CSI in measured and estimated downlink channel information is denoted as original CSI. The terminal device compresses and quantizes the original CSI by using the CSI generator, and then sends compressed and quantized CSI to the access network device. The access network device dequantizes and decompresses the received compressed and quantized CSI by using the CSI reconstructor, to obtain restored CSI.

As a data-based technology, the AI model is sensitive to scenario changes. When a scenario in which the AI model is deployed differs greatly from a scenario corresponding to training data for training the AI model, performance of the AI model may deteriorate sharply. For an AI model-based CSI feedback scenario, if a current communication environment differs greatly from a communication environment in which the AI model is trained, the performance of the AI model may deteriorate. The performance of the AI model directly affects accuracy of CSI feedback and restoration. How to monitor the performance of the AI model becomes a problem worth studying.

Model monitoring can be used to determine the performance of the AI model. A model monitoring manner may be referred to as a final key performance indicator (key performance indicator, KPI) monitoring manner, and may include: monitoring a performance indicator of a communication system in which the AI model is used, and determining, based on whether the performance indicator meets a requirement, whether performance of the AI model meets a requirement. For a wireless communication system, the performance indicator may include one or more of the following: a throughput, spectral efficiency, a transmission rate, a block error rate (block error rate, BLER), a hypothetical BLER (hypothetical BLER), a hybrid automatic repeat request (hybrid automatic repeat request, HARQ) feedback, or the like. Another model monitoring manner may be referred to as an intermediate KPI monitoring manner, and may include: monitoring an output of an AI model, and determining, by comparing a difference between the output of the AI model and a corresponding label or truth value (ground-truth), whether performance of the AI model meets a requirement. In the intermediate KPI monitoring manner, whether the AI model meets the requirement may be generally determined based on one or more of the following indicators: generalized cosine similarity (generalized cosine similarity, GCS), squared generalized cosine similarity (squared generalized cosine similarity, SGCS), normalized mean square error (normalized mean square error, NMSE), and the like. Model monitoring may be performed by a terminal, or may be performed by a network device.

In the wireless communication scenario, to monitor the performance of the AI model, the terminal needs to know a manner of determining a transmission parameter of a downlink transmission, for example, whether the transmission parameter is determined based on AI. The network device needs to know a manner of determining a transmission parameter of an uplink transmission.

Therefore, an embodiment of this application provides a communication method and a related apparatus that can implement the method. The communication method is described by using a network side apparatus and a terminal side apparatus as an example for execution. The network side apparatus in embodiments of this application may be a network device, or a chip, a chip system, a unit, or a module in the network device. For example, the network side apparatus may be the access network device 110a or the access network device 110b in FIG. 1. Alternatively, the network side apparatus may be a communication apparatus having a network device function, or a chip or a chip system, unit, or module in a communication apparatus having a network device function. The apparatus may be mounted in a network device or used in cooperation with the network device. The terminal side apparatus in embodiments of this application may be a terminal, or a chip, a chip system, a unit, or a module in the terminal, for example, may be any terminal 120 shown in FIG. 1. Alternatively, the terminal side apparatus may be a communication apparatus having a terminal function, or a chip or a chip system, unit, or module in a communication apparatus having a terminal function. The apparatus may be mounted in a terminal or used in cooperation with the terminal. For ease of understanding, in embodiments of this application, an example in which the terminal side apparatus is a terminal device or a chip, a unit, or a module inside a terminal device, and the network side apparatus is a network device or a chip, a unit, or a module inside a network device is used for description.

To support a machine learning function in a wireless network, in embodiments of this application, a dedicated AI entity or module may be further introduced in the network. If the AI entity is introduced, the AI entity may correspond to an independent network element. If the AI module is introduced, the AI module may be located in a network element, and a corresponding network element may be a terminal, a network device, or the like.

To make the objectives, technical solutions, and advantages of this application clearer, the following further describes this application in detail with reference to the accompanying drawings. A specific operation method in a method embodiment may also be applied to an apparatus embodiment or a system embodiment.

In embodiments of this application, if there is no logical conflict, the terms "channel state information" and "CSI" may be interchanged, and the terms "report", "feedback", and "send" may be interchanged.

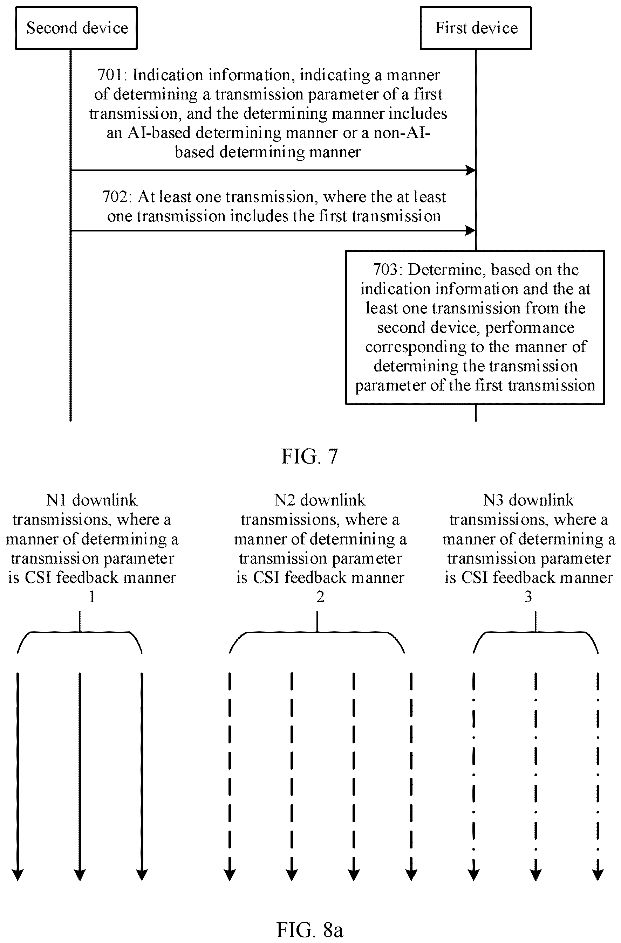

Based on the network system architecture shown in FIG. 1, FIG. 5a, or FIG. 5b and the content described in the foregoing related technologies, FIG. 7 is an example of a possible schematic flowchart of a communication method according to an embodiment of this application. The solution in FIG. 7 is described by using an example in which a first device and a second device interact with each other for execution. For a downlink transmission, the first device is a terminal side apparatus, and the second device is a network side apparatus. For an uplink transmission, the first device is the network side apparatus, and the second device is the terminal side apparatus. For related descriptions of the network side apparatus and the terminal side apparatus, refer to the foregoing content. Details are not described again. In the following embodiments, an example in which the network side apparatus is a network device and the terminal side apparatus is a terminal device is used for description.

Refer to FIG. 7. The method includes the following steps.

Step 701: A second device sends indication information to a first device, and correspondingly, the first device receives the indication information.

The indication information indicates a manner of determining a transmission parameter of a first transmission, and the determining manner includes an AI-based determining manner or a non-AI-based determining manner.

Optionally, the transmission parameter of the first transmission may include one or more of precoding, a beam, an MCS, a quantity of transport streams, and resource allocation of the first transmission.

In a downlink transmission scenario, the second device is a network device, for example, a base station, the first device is a terminal, and the first transmission is a first downlink transmission, for example, includes one or more of a physical downlink shared channel (physical downlink shared channel, PDSCH), a physical downlink control channel (physical downlink control channel, PDCCH), a channel state information-reference signal (channel state information-reference signal, CSI-RS), a demodulation reference signal (demodulation reference signal, DMRS), a synchronization signal and physical broadcast channel block (synchronization signal and physical broadcast channel block, SSB), and the like. In this scenario, the network device may determine the transmission parameter of the first transmission (the first downlink transmission) based on feedback information (for example, channel state information or other information that can represent channel quality) of the terminal, or the network device may determine the transmission parameter of the first transmission.

In an uplink transmission scenario, the second device is a terminal, the first device is a network device, for example, a base station, and the first transmission is a first uplink transmission, for example, a sounding reference signal (sounding reference signal, SRS) or a tracking reference signal (tracking reference signal, TRS). In this scenario, the terminal may determine the transmission parameter of the first transmission (the first uplink transmission) based on feedback information (for example, channel state information or other information that can represent channel quality) of the network device, or the terminal may determine the transmission parameter of the first transmission.

The determining manner of the transmission parameter of the first transmission may be the AI-based determining manner, or may be the non-AI-based determining manner.

That the transmission parameter of the first transmission is determined based on the AI means that the transmission parameter (for example, one or more of the precoding, the beam, the MCS, the quantity of transport streams, and the resource allocation) of the first transmission is obtained through the AI. The transmission parameter of the first transmission is generally determined based on channel measurement. There are different methods for determining the transmission parameter based on channel measurement, for example, determining the transmission parameter based on an AI model, or determining the transmission parameter based on a non-AI algorithm. From channel measurement to transmission parameter determining, one step may be included, that is, directly calculating the transmission parameter based on the channel measurement, or multiple steps may be included, for example, performing channel estimation based on the channel measurement to obtain CSI (which may be different representation forms of the CSI such as a channel response, a channel feature, and an RSRP). If the CSI is not obtained by the second device, CSI feedback further needs to be performed, and the second device determines the transmission parameter based on the obtained CSI. The AI-based determining manner means that the foregoing steps from the channel measurement to the transmission parameter determining are completed by an AI model, or at least one of multiple steps from the channel measurement to the transmission parameter determining is completed by an AI model. For example, the channel estimation is AI-based channel estimation, or the CSI feedback is AI-based, or CSI compression and/or CSI reconstruction in the CSI feedback is AI-based, or CSI prediction is AI-based, or beam prediction is AI-based, or determining the transmission parameter based on CSI is AI-based.

The AI-based determining manner and the non-AI-based determining manner are for a same step or multiple same steps. A CSI feedback step in a downlink transmission is used as an example. As shown in FIG. 6, determining a transmission parameter of a first transmission based on AI means that on a terminal side, a CSI generator compresses and quantizes original CSI measured by a terminal, and on a base station side, a CSI reconstructor dequantizes and decompresses received compressed and quantized CSI, to determine the transmission parameter of the downlink transmission based on CSI output by the CSI reconstructor. That the transmission parameter of the first transmission is determined based on non-AI means that on a terminal side, CSI is compressed and quantized based on a codebook predefined in a protocol (for example, 3GPP TS 38.214), and on a base station side, received compressed and quantized CSI is dequantized and decompressed based on a corresponding codebook, to obtain the CSI through restoration. In this example, the AI-based determining manner and the non-AI-based determining manner are for the CSI feedback step. A manner in which the base station side determines the transmission parameter (for example, one or more of precoding, a beam, an MCS, a quantity of transport streams, and resource allocation) of the first transmission based on the restored CSI is not limited, and may be an AI-based determining manner or a non-AI-based determining manner.

Optionally, to prevent another irrelevant factor from affecting performance monitoring, for two transmissions with different determining manners of transmission parameters, other than one or more specific steps corresponding to the determining manner and/or in addition to one or more specific parameters corresponding to the determining manner, parameters of the two transmissions are the same or manners of determining parameter are the same. The CSI feedback step is used as an example. For example, Parameters of two transmissions are respectively precoding determined based on AI CSI feedback and precoding determined based on non-AI CSI feedback. In this case, other parameters of the two transmissions are the same, for example, multiuser pairing manners are the same, MCSs are the same, resource allocation is the same, or determining manners are the same, for example, methods for calculating precoding based on CSI are the same, and channel estimation methods are the same.

Optionally, the AI-based determining manner may include a first AI model-based determining manner and a second AI model-based determining manner. It may be understood that more determining manners such as a third AI model-based determining manner may be further included. In a possible implementation, a function of a first AI model is the same as a function of the second AI model. For example, both the first AI model and the second AI model are used for CSI feedback. Specifically, the first AI model and the second AI model may be used to implement CSI compression, or the first AI model and the second AI model may be used to implement CSI decompression. For another example, both the first AI model and the second AI model are used for beam prediction. The first AI model and the second AI model have different structures. For example, both the first AI model and the second AI model are implemented based on neural networks, but depths (a quantity of layers) and/or widths (a quantity of neurons) of the neural networks of the first AI model and the second AI model are different. In another possible implementation, the function of the first AI model is the same as the function of the second AI model, but coefficients of the first AI model and the second AI model are different. In another possible implementation, the function of the first AI model is the same as the function of the second AI model, but structures and coefficients of the first AI model and the second AI model are different.

Embodiments of this application are applicable to the following possible scenarios.

A possible scenario 1 is a CSI feedback scenario 1.

In the CSI feedback scenario 1, in one case, CSI compression (which may further include quantization) is completed by using an AI model (for example, a CSI generator), and CSI decompression (or referred to as CSI restoration, which may further include dequantization) is completed by using an AI model (for example, a CSI reconstructor). In another case, CSI compression (which may further include quantization) is not completed based on an AI model, and CSI decompression (which may further include dequantization) is not completed based on an AI model. Specifically, CSI compression (which may further include the quantization) and CSI decompression (which may further include the dequantization) may be implemented in a codebook-based CSI feedback manner, for example, including one or more of the following: a release-15 (R15) type I codebook, an R15 type II codebook, an R16 type II codebook (or referred to as an enhanced type II codebook), an R16 port selection codebook, an R17 port selection codebook, an R18 codebook, and the like.

Correspondingly, the manner of determining of the transmission parameter of the first transmission includes: A determining manner 1 is an AI-based CSI feedback manner. In other words, for CSI used to determine the transmission parameter, CSI compression (which may further include the quantization) is implemented based on the AI model, and CSI decompression (which may further include the dequantization) is also implemented based on the AI model.

Optionally, the AI-based CSI feedback manner may further include a first AI model-based CSI feedback manner and a second AI model-based CSI feedback manner. It may be understood that more manners such as a third AI model-based CSI feedback manner may be further included.

A determining manner 2 is a non-AI-based CSI feedback manner. In other words, for the CSI used to determine the transmission parameter, CSI compression (which may further include the quantization) is not implemented based on the AI model, and CSI decompression (which may further include the dequantization) is not implemented based on the AI model.

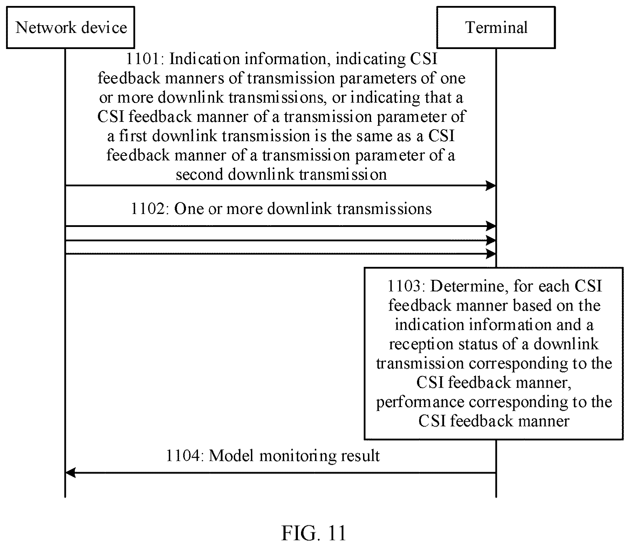

For an example of an implementation in the CSI feedback scenario in this embodiment of this application, refer to a procedure shown in FIG. 11 below.

A possible scenario 2 is a CSI feedback scenario 2.

In the CSI feedback scenario 2, in one case, CSI compression (which may further include quantization) is completed by using an AI model (for example, a CSI generator). In another case, CSI compression (which may further include quantization) is not completed based on the AI model. Specifically, CSI compression (which may further include the quantization) may be implemented in a codebook-based CSI feedback manner, for example, including one or more of the following: a release-15 (R15) type I codebook, an R15 type II codebook, an R16 type II codebook (or referred to as an enhanced type II codebook), an R16 port selection codebook, an R17 port selection codebook, an R18 codebook, and the like. CSI decompression (which may further include dequantization) is either completed in an AI manner or completed in a non-AI manner. In other words, an implementation of the CSI decompression (which may further include the dequantization) may be fixed.

Correspondingly, the manner of determining of the transmission parameter of the first transmission includes: A determining manner 1 is an AI-based CSI compression manner. In other words, for the CSI used to determine the transmission parameter, CSI compression (which may further include the quantization) is implemented based on the AI model, and CSI decompression (which may further include the dequantization) is implemented in a fixed manner, for example, implemented in the AI manner or implemented in the non-AI manner.

Optionally, the AI-based CSI compression manner may further include a first AI model-based CSI compression manner and a second AI model-based CSI compression manner. It may be understood that more manners such as a third AI model-based CSI compression manner may be further included.

A determining manner 2 is a non-AI-based CSI compression manner. In other words, for the CSI used to determine the transmission parameter, CSI compression (which may further include the quantization) is not implemented based on the AI model, and CSI decompression (which may further include the dequantization) is implemented in a fixed manner, for example, implemented in the AI manner or implemented in the non-AI manner.

A possible scenario 3 is a CSI feedback scenario 3.

In the CSI feedback scenario 3, in one case, CSI decompression (which may further include dequantization) is completed by using an AI model (for example, a CSI generator). In another case, CSI decompression (which may further include the dequantization) is not completed based on the AI model. Specifically, CSI decompression (which may further include the dequantization) may be implemented in a codebook-based CSI feedback manner, for example, including one or more of the following: a release-15 (R15) type I codebook, an R15 type II codebook, an R16 type II codebook (or referred to as an enhanced type II codebook), an R16 port selection codebook, an R17 port selection codebook, an R18 codebook, and the like. CSI compression (which may further include quantization) is either completed in an AI manner or completed in a non-AI manner. In other words, an implementation of the CSI compression (which may further include the quantization) may be fixed.

Correspondingly, the manner of determining of the transmission parameter of the first transmission includes: A determining manner 1 is an AI-based CSI reconstruction manner. In other words, for the CSI used to determine the transmission parameter, CSI decompression (which may further include the dequantization) is implemented based on the AI model, and CSI compression (which may further include the quantization) is implemented in a fixed manner, for example, implemented in the AI manner or implemented in the non-AI manner.

Optionally, the AI-based CSI reconstruction manner may further include a first AI model-based CSI reconstruction manner and a second AI model-based CSI reconstruction manner. It may be understood that more manners such as a third AI model-based CSI reconstruction manner may be further included.

A determining manner 2 is a non-AI-based CSI reconstruction manner. In other words, for the CSI used to determine the transmission parameter, CSI decompression (which may further include the dequantization) is not implemented based on the AI model, and CSI compression (which may further include the quantization) is implemented in a fixed manner, for example, implemented in the AI manner or implemented in the non-AI manner.

A possible scenario 4 is a CSI prediction scenario.

In the CSI prediction scenario, for the first transmission, the CSI used to determine the transmission parameter (for example, precoding) of the first transmission may be determined by a transmit end (the second device in this embodiment) of the first transmission based on historical data (historical CSI) without waiting for CSI fed back by a receive end (the first device in this embodiment of this application).

In another CSI prediction scenario, for the first transmission, the CSI used to determine the transmission parameter (for example, precoding) of the first transmission may be determined by a receive end (the first device in this embodiment) of the first transmission based on historical data (historical CSI), and then predicted CSI is fed back to a transmit end (the second device in this embodiment) of the first transmission, to determine the transmission parameter of the first transmission.

In the CSI prediction scenario, the manner of determining of the transmission parameter of the first transmission may include:

A determining manner 1 is an AI-based CSI prediction manner. In other words, the CSI used to determine the transmission parameter is obtained through prediction based on the AI model.

Optionally, the AI-based CSI prediction manner may further include a first AI model-based CSI prediction manner and a second AI model-based CSI prediction manner. It may be understood that more manners such as a third AI model-based CSI prediction manner may be further included.

A determining manner 2 is a non-AI-based CSI prediction manner. In other words, the CSI used to determine the transmission parameter is not obtained through prediction based on the AI model. For example, the CSI prediction manner may be specifically an autoregressive (autoregressive)-based CSI prediction manner.

A determining manner 3 is a non-CSI prediction manner. The non-CSI prediction manner means that CSI prediction is not performed, that is, the transmission parameter of the first transmission is determined by using a latest CSI measurement result.

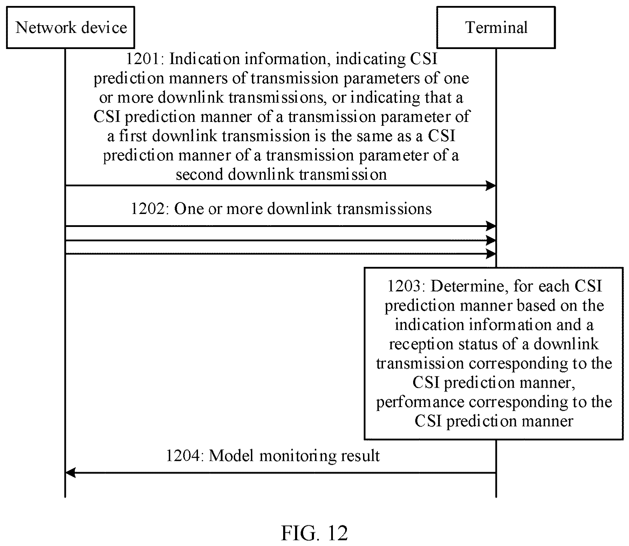

For an example of an implementation in the CSI prediction scenario in this embodiment of this application, refer to a procedure shown in FIG. 12 below.

A possible scenario 5 is a beam prediction scenario.

In the beam prediction scenario, beam prediction refers to predicting, based on CSI (which may be different representation forms of CSI such as a channel response, a channel feature, and an RSRP), a beam used for an uplink transmission or a downlink transmission. The beam prediction may include spatial domain prediction and time domain prediction. The spatial domain prediction refers to predicting an optimal beam in all beam sets based on CSI of a part of beam sets. The time domain prediction refers to predicting a current or future optimal beam based on historical CSI. For the first transmission, a determining manner (or a prediction manner) of a beam used for the first transmission may include: A determining manner 1 is an AI-based beam prediction manner. In other words, the beam used for the first transmission is obtained based on an AI model.

Optionally, the AI-based beam prediction manner may further include a first AI model-based beam prediction manner and a second AI model-based beam prediction manner. It may be understood that more manners such as a third AI model-based beam prediction manner may be further included.

A determining manner 2 is a non-AI-based beam prediction manner. For example, the beam used for the first transmission is obtained by using a linear interpolation beam prediction method.

A determining manner 3 is a non-beam prediction manner. The non-beam prediction manner means that beam prediction is not performed, that is, only an optimal beam is selected from measured beams as the beam used for the first transmission.

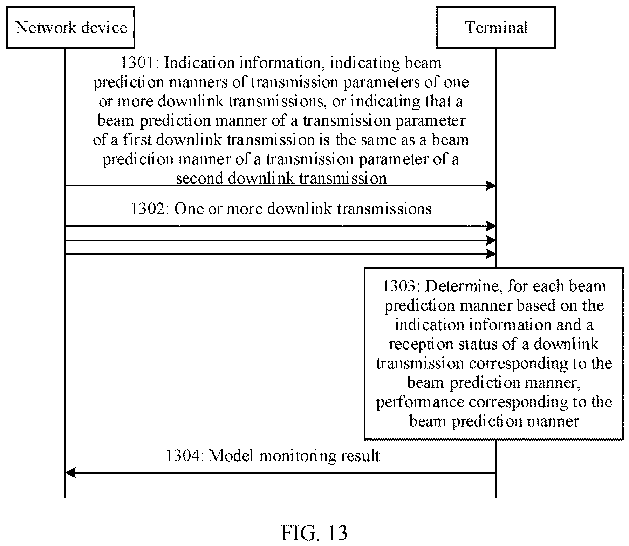

For an example of an implementation in the beam prediction scenario in this embodiment of this application, refer to a procedure shown in FIG. 13 below.

It may be understood that the foregoing merely lists several possible scenarios as an example. Embodiments of this application may be further applied to another scenario. This is not limited herein.

In a possible implementation, the indication information in embodiments of this application may indicate one transmission or multiple transmissions. The downlink transmission is used as an example. In a possible implementation, the indication information may indicate all possible downlink transmissions, for example, including a PDSCH, a PDCCH, a CSI-RS, a DMRS, and an SSB. The downlink transmission is still used as an example. In another possible implementation, the indication information may indicate only one or more specific downlink transmissions, for example, indicate only a PDSCH or a CSI-RS. In another possible implementation, the indication information may indicate only a transmission on which model monitoring needs to be performed. For example, for a PDSCH, CSI used to determine a transmission parameter of the PDSCH may be obtained in an AI manner (for example, CSI compression is implemented by using the AI model). A system can specify that model monitoring needs to be performed for the PDSCH, to determine performance of the AI model. Optionally, a transmission or transmissions included in the first transmission indicated by the indication information may be pre-agreed or configured by the network side. For example, the downlink transmission indicated by the indication information may be pre-agreed as all possible downlink transmissions, or the downlink transmission indicated by the indication information may be pre-agreed as a downlink transmission on which model monitoring needs to be performed, and which downlink transmission is a downlink transmission on which model monitoring needs to be performed may be pre-agreed or configured by the network side. Optionally, that the indication information indicates determining manners of transmission parameters of multiple transmissions may be understood as that the indication information indicates a manner of determining a transmission parameter of each of the multiple transmissions.

Optionally, when the first transmission is repeated or retransmitted, an initial transmission and all repetitions or retransmissions of the first transmission may be considered as one transmission. In this scenario, a manner of determining a transmission parameter of the initial transmission of the first transmission is the same as a manner of determining a transmission parameter of each repetition (or retransmission) of the first transmission. Optionally, when the first transmission is repeated or retransmitted, an initial transmission of the first transmission may be considered as an independent transmission, and each repetition or retransmission of the first transmission may be considered as an independent transmission. In this scenario, determining manners of transmission parameters of the initial transmission and each repetition (or retransmission) of the first transmission may be the same, or determining manners of transmission parameters of the initial transmission and each repetition (or retransmission) of the first transmission may be different.

In a possible implementation, the indication information in embodiments of this application may indicate a transmission within a first time period. It may be understood that the transmission within the first time period may include one transmission or multiple transmissions. Optionally, a length of the first time period may be represented by a quantity of time units. The time units may be, for example, one or more symbols, one or more slots, one or more mini-slots, or n milliseconds, and n is a positive integer, for example, n=1 or n=10. This is not limited in embodiments of this application.

In a possible implementation, the indication information in embodiments of this application includes index information of the determining manner of the transmission parameter of first transmission. For example, each determining manner may be pre-assigned a number as index information of each determining manner. In this way, the number of the determining manner is indicated in the indication information, to indicate the manner of determining of the transmission parameter of the first transmission. In another possible implementation, the indication information in embodiments of this application includes type information of the first transmission, and there is a correspondence between a type of the first transmission and the manner of determining of the transmission parameter of the first transmission. In this way, the type of the first transmission may indicate the manner of determining of the transmission parameter of the first transmission. Optionally, in embodiments of this application, type division may be performed on the transmission from a perspective of whether the transmission is used for model monitoring and whether the transmission parameter is determined based on the AI model. For example, multiple transmission types or scheduling types are predefined, including: a type 1: a transmission or scheduling used for a normal data transmission (a transmission of this type or a transmission scheduled in this type is not used for model monitoring); a type 2: a transmission or scheduling that is used for monitoring and that is based on an AI determining manner (a transmission of this type or a transmission scheduled in this type may be further classified into transmissions based on determining manners that are based on different AI models); and a type 3: a transmission or scheduling that is used for monitoring and that is based on a non-AI determining manner. The transmission type or the scheduling type corresponds to the manner of determining of the transmission parameter of the first transmission, and the indication information may indicate the manner of determining of the transmission parameter of the first transmission by indicating the transmission type or the scheduling type.

In a possible implementation, the indication information may implicitly indicate the manner of determining of the transmission parameter of the first transmission. In other words, the indication information does not directly indicate the manner of determining of the transmission parameter of the first transmission, but there is an association relationship between content indicated by the indication information and the manner of determining of the transmission parameter of the first transmission. For example, there is a correspondence between the manner of determining of the transmission parameter of the first transmission and a reference signal corresponding to the transmission, and different determining manners of the transmission parameter of the first transmission respectively correspond to different reference signal sequences or resource mapping patterns. In this case, the first device may determine the manner of determining of the transmission parameter of the first transmission based on the reference signal corresponding to the first transmission.

In a possible implementation, the indication information in embodiments of this application may indicate a first transmission pattern. The first transmission pattern includes a first determining manner corresponding to N consecutive transmissions, the N consecutive transmissions include the first transmission, the first determining manner is the manner of determining of the transmission parameter of the first transmission, and N is a positive integer. This implementation may be applicable to a scenario in which multiple consecutive transmissions in time have a same determining manner of a transmission parameter. The first transmission pattern may indicate the determining manner corresponding to the multiple consecutive transmissions, a determining manner corresponding to multiple subsequent consecutive transmissions, and the like. A downlink transmission in a CSI feedback scenario is used as an example. As shown in FIG. 8a, a downlink transmission pattern may indicate that, starting from an effective moment of the downlink transmission pattern, a determining manner of transmission parameters of first N1 downlink transmissions is a CSI feedback manner 1, a determining manner of transmission parameters of subsequent N2 downlink transmissions is a CSI feedback manner 2, and a determining manner of transmission parameters of subsequent N3 downlink transmissions is a CSI feedback manner 3. The CSI feedback manner 1, the CSI feedback manner 2, and the CSI feedback manner 3 may be, for example, any three of an AI-based CSI feedback manner, a non-AI-based CSI feedback manner, an AI-based CSI compression manner, a non-AI-based CSI compression manner, an AI-based CSI reconstruction manner, and a non-AI-based CSI reconstruction manner. For descriptions of the three manners, refer to the foregoing content. Correspondingly, the downlink transmission pattern may be {CSI feedback manner 1: N1, CSI feedback manner 2: N2, CSI feedback manner 3: N3}. Optionally, the downlink transmission pattern may further include some vacant bits. The vacant bits indicate that determining manners of transmission parameters of these downlink transmissions are not indicated. Correspondingly, model monitoring does not need to be performed on these downlink transmissions. For example, a format of the downlink transmission pattern may be {CSI feedback manner 1: N1, vacant bit: K1, CSI feedback manner 2: N2, vacant bit: K2, CSI feedback manner 3: N3}. The "vacant bit: K1" indicates that a determining manner of transmission parameters of K1 downlink transmissions after the N1 downlink transmissions is not indicated. N1, N2, and N3 may all be 1. Therefore, this implementation is not limited to the scenario in which the determining manners of the transmission parameters of the multiple consecutive transmissions in time are the same.

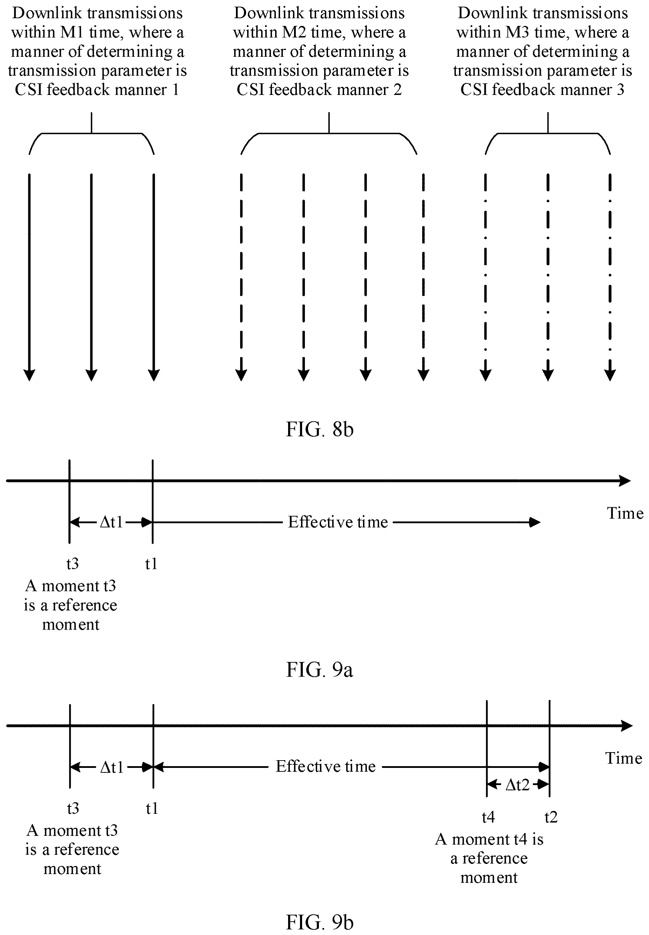

In a possible implementation, the indication information in embodiments of this application may indicate a second transmission pattern including a first determining manner corresponding to the transmission within the first time period, the transmission within the first time period includes the first transmission, and the first determining manner is the manner of determining of the transmission parameter of the first transmission. This implementation may be applicable to a scenario in which multiple transmissions within a time period have a same determining manner of transmission parameters. The second transmission pattern may indicate the determining manner corresponding to the transmissions within the time period, a determining manner corresponding to a transmission within a subsequent time period, and the like. A downlink transmission in a CSI feedback scenario is used as an example. As shown in FIG. 8b, a downlink transmission pattern indicates that a determining manner of transmission parameters of downlink transmissions within first M1 time (for example, M1 time units, specifically, M1 slots) is a CSI feedback manner 1, a determining manner of transmission parameters of downlink transmissions within subsequent M2 time is a CSI feedback manner 2, and a determining manner of transmission parameters of downlink transmissions within subsequent M3 time is a CSI feedback manner 3. Correspondingly, a specific format of the downlink transmission pattern may be {CSI feedback manner 1: M1, CSI feedback manner 2: M2, CSI feedback manner 3: M3}. Optionally, the downlink transmission pattern may further include some vacant bits. The vacant bits indicate that determining manners of transmission parameters of these downlink transmissions within time are not indicated. For example, a format of the downlink transmission pattern may be {CSI feedback manner 1: M1, vacant bit: K1, CSI feedback manner 2: M2, vacant bit: K2, CSI feedback manner 3: M3}. The "vacant bit: K1" indicates that a manner of determining a transmission parameter of a downlink transmission within K1 time is not indicated. M1, M2, and M3 may all be 1. Therefore, this implementation is not limited to the scenario in which the determining manners of the transmission parameters of the multiple transmissions within the time period are the same.

Optionally, the network side may preconfigure or predefine multiple transmission patterns, and the second device may indicate or activate one of the multiple transmission patterns by using the indication information, for example, indicate or activate one of the multiple transmission patterns by using an index of the transmission pattern.

In a possible implementation, the indication information in embodiments of this application may be dynamic signaling, for example, may be downlink control information (downlink control information, DCI). In this case, the first transmission indicated by the DCI is a transmission scheduled by using the DCI. In other words, the manner of determining of the transmission parameter of the first transmission may be indicated by using the DCI used to schedule the first transmission. In another possible implementation, the indication information in embodiments of this application is a MAC control element (control element, CE). In another possible implementation, the indication information may be semi-static. For example, the indication information is higher layer (higher layer) signaling, for example, radio resource control (radio resource control, RRC) signaling. The higher layer signaling may indicate determining manners of transmission parameters of multiple transmissions, or may indicate a manner of determining a transmission parameter of a transmission within a first time period. In addition, the indication information may alternatively be a combination of higher layer signaling and lower layer signaling. For example, RRC signaling indicates determining manners of transmission parameters of multiple transmissions, and DCI or MAC signaling activates (indicates) one of the determining manners of the transmission parameters of the multiple transmissions.

In embodiments of this application, the indication information may be periodic. In other words, within effective time of the indication information, a determining manner that is of a transmission parameter and that is indicated by the indication information is periodically repeated until a next piece of indication information (the indication information indicates determining manners of transmission parameters of one or more transmissions) is received, or until indication information indicating to stop model monitoring is received, or until an effective period of the indication information ends.

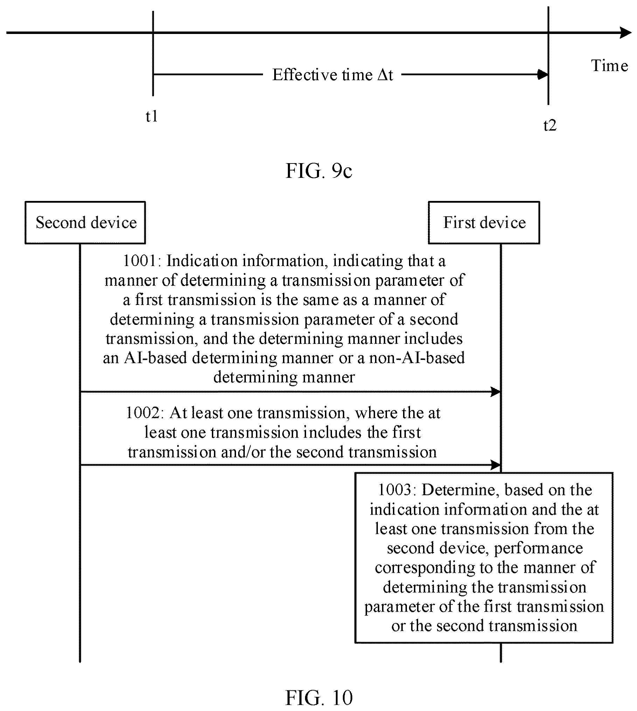

Optionally, the effective time of the indication information (for example, the effective time of the downlink transmission pattern indicated by using the indication information) may be after a moment t1, as shown in FIG. 9a; or the effective time is after a moment t1 and before a moment t2, as shown in FIG. 9b. Herein, t1 may be t3+$\Delta$t1, and t3 is a reference moment, for example, a moment at which the indication information is received. Optionally, the indication information may be used to activate a transmission pattern. In this case, t3 is a moment at which the transmission pattern is activated by using the indication information, $\Delta$t1 is a time offset that is predefined or configured by the network side and that is relative to the reference moment, and $\Delta$t1 is greater than or equal to 0. Similarly, t2 may be t4+$\Delta$t2, and t4 is a reference moment, for example, a moment at which the indication information is received. Optionally, the indication information may be used to deactivate a transmission pattern. In this case, t4 is a moment at which the transmission pattern is deactivated by using the indication information, t4 and t3 may be a same moment, $\Delta$t2 is a time offset that is predefined or configured by the network side and that is relative to the reference moment, and $\Delta$t2 is greater than or equal to 0. Alternatively, t2 may be t1+$\Delta$t, $\Delta$t is effective duration predefined or configured by the network side, and $\Delta$t is greater than 0, as shown in FIG. 9c.

If the indication information is periodic, a period T is predefined or configured by a base station. Specially, the period T may be equal to duration of the downlink transmission pattern by default. For example, when the first transmission pattern indicated by the indication information includes the first determining manner corresponding to the N consecutive transmissions, the period T may be duration corresponding to the N transmissions. For another example, when the second transmission pattern indicated by the indication information includes the first determining manner corresponding to the transmission within the first time period, the period T may be duration of the first time period.

The indication information in embodiments of this application may alternatively be aperiodic. In comparison with periodicity, aperiodicity means that the determining manner that is of the transmission parameter of the first transmission and that is indicated by the indication information is valid only once. For example, the indication information indicates a manner of determining a transmission parameter of a downlink transmission within the first time period, and the indication information is valid only within the first time period. For aperiodic indication information, for example, a downlink transmission pattern, the downlink transmission pattern takes effect once from the moment t1. For a definition of t1, refer to the foregoing descriptions.

Step 702: The second device sends at least one transmission to the first device, where the at least one transmission includes the first transmission. Correspondingly, the first device receives the at least one transmission sent by the second device.

In this embodiment of this application, the first device may receive the at least one transmission on a time-frequency resource corresponding to the at least one transmission.

Step 703: The first device determines, based on the indication information and the at least one transmission from the second device, performance corresponding to the manner of determining of the transmission parameter of the first transmission.

Optionally, the performance may include one or more of the following: throughput, spectral efficiency, transmission rate, BLER, assumed BLER (hypothetical BLER), SINR, RSRP, HARQ feedback (for example, including HARQ ACK/NACK), generalized cosine similarity (generalized cosine similarity, GCS), squared generalized cosine similarity (squared generalized cosine similarity, SGCS), mean square error (mean square error, MSE), normalized mean square error (normalized mean square error, NMSE), and the like. This is not limited in embodiments of this application.

In embodiments of this application, after determining the manner of determining of the transmission parameter of the first transmission based on the indication information, the first device may determine the performance based on a reception status on the time-frequency resource of the first transmission, and use the determined performance as the performance corresponding to the determining manner. If the first device determines, based on the indication information, that the determining manners of the transmission parameters of the N (N is an integer greater than 1) transmissions are all the same, the first device may determine performance based on reception statuses on time-frequency resources corresponding to the N transmissions. The performance is determined based on the reception statuses of the transmissions of which the determining manners of the N transmission parameters are the same. A BLER is used as an example. The BLER is an average block error rate of the N transmissions. A throughput is used as an example. The throughput is a total throughput of the N transmissions.

Optionally, the first device may calculate, based on each determining manner indicated by the indication information, performance corresponding to each determining manner.

Optionally, if the indication information is periodic, in each period after the indication information is received, the first device may determine, based on the indication information and the at least one transmission from the second device within the period, performance corresponding to the manner of determining of the transmission parameter of the first transmission.

Optionally, the first device may perform some operations based on a model monitoring result, to improve system performance. A CSI feedback scenario is used as an example. If the first device determines that the manner of determining of the transmission parameter of the first transmission is the AI model-based CSI feedback manner, and performance corresponding to the AI model-based CSI feedback manner does not meet a system requirement (for example, a BLER is greater than a specified threshold, or a throughput rate is less than a specified threshold), the first device may switch the manner of determining of the transmission parameter of the first transmission from the AI model-based CSI feedback manner to the non-AI model-based CSI feedback manner, or replace an AI model used for CSI compression and decompression, or update an AI model used for CSI compression and decompression (for example, retrain the AI model, and replace an original AI model with a trained AI model).

Optionally, the first device may further send first information to the second device, where the first information includes the performance corresponding to the determining manner that is of the transmission parameter of the first transmission and that is determined by the first device. In other words, the first device may send the determined performance as the monitoring result to the second device.

Optionally, the first device may further send the first information to the second device, where the first information may include one or more of the following: performance of at least one determining manner in multiple determining manners; a determining manner corresponding to optimal performance in performance corresponding to multiple determining manners; a determining manner corresponding to performance higher than a threshold in the performance corresponding to the multiple determining manners; a determining manner corresponding to performance lower than the threshold in the performance corresponding to the multiple determining manners; and a determining manner recommended by the terminal device in the performance corresponding to the multiple determining manners. The multiple determining manners include a manner of determining a transmission parameter of each of the at least one transmission sent by the second device. In other words, the first device may send the foregoing information as the model monitoring result to the second device.

Optionally, the first device may alternatively report the model monitoring result to a network management system. For content of the model monitoring result, refer to the foregoing description.

In the procedure shown in FIG. 7, because the second device sends determining manners of transmission parameters of one or more transmissions to the first device by using the indication information, the first device may learn of a manner of determining a transmission parameter of a related transmission, and may determine corresponding performance for each determining manner based on a reception status of a corresponding transmission, thereby implementing model monitoring. A CSI feedback scenario is used as an example. Based on the foregoing procedure, after obtaining the model monitoring result, the first device may compare performance corresponding to the AI-based CSI feedback manner and performance corresponding to the non-AI-based CSI feedback manner, to monitor the AI model. For example, the performance corresponding to the AI model-based CSI feedback manner is compared with the performance corresponding to the non-AI-based CSI feedback manner. If the performance corresponding to the AI model-based CSI feedback manner is better, it indicates that the performance of the AI model meets a requirement. Otherwise, it indicates that the performance of the AI model does not meet the requirement, and an operation such as CSI feedback manner switching, or AI model replacement or update may be performed.

Based on the network system architecture shown in FIG. 1, FIG. 5a, or FIG. 5b and the content described in the foregoing related technologies, FIG. 10 is an example of a possible schematic flowchart of another communication method according to an embodiment of this application. The solution in FIG. 10 is described by using an example in which a first device and a second device interact with each other. For a downlink transmission, the first device is a terminal side apparatus, and the second device is a network side apparatus. For an uplink transmission, the first device is the network side apparatus, and the second device is the terminal side apparatus. For related descriptions of the network side apparatus and the terminal side apparatus, refer to the foregoing content. Details are not described again. In the following embodiments, an example in which the network side apparatus is a network device and the terminal side apparatus is a terminal device is used for description.

Refer to FIG. 10. The method includes the following steps.

Step 1001: A second device sends indication information to a first device, and correspondingly, the first device receives the indication information.

The indication information indicates that a manner of determining a transmission parameter of a first transmission is the same as a manner of determining a transmission parameter of a second transmission, and the determining manner includes an AI-based determining manner or a non-AI-based determining manner. For related descriptions of the AI-based determining manner or the non-AI-based determining manner, refer to related content in FIG. 7.

It may be understood that the indication information may indicate that there is an association between the first transmission and the second transmission. The association relationship is defined from a perspective of the determining manner of the transmission parameter. For example, for multiple transmissions that have a same determining manner of transmission parameters, the multiple transmissions may be referred to as having an association relationship. In this way, when performing, based on the indication information, model monitoring processing for the multiple transmissions that have the same determining manner of the transmission parameters, the first device may comprehensively consider reception statuses of these downlink transmissions to determine performance. Therefore, performance corresponding to the determining manner of the transmission parameters of these transmissions can be obtained.

In another possible implementation, for multiple transmissions (for example, two transmissions) that have different determining manners of transmission parameters, the multiple transmissions may also be referred to as having an association relationship. For example, the indication information indicates that there is an association relationship between the first transmission and the second transmission. The first device may separately determine performance for the first transmission and the second transmission based on the indication information, to compare the performance corresponding to the manner of determining of the transmission parameter of the first transmission with the performance corresponding to the manner of determining of the transmission parameter of the second transmission.

In a possible implementation, the first device only needs to know determining manners of transmission parameters of which transmissions are the same or different, and does not need to know whether the determining manners of the transmission parameters of these transmissions are AI-based or non-AI-based. In this case, the second device does not need to indicate specific determining manners of the transmission parameters of these transmissions, and the first device only needs to monitor performance corresponding to different determining manners of the transmission parameters corresponding to these transmissions, for example, performance of a first determining manner and performance of a second determining manner.

It should be understood that, "first" and "second" are virtual identifiers of determining manners (for example, determining manners corresponding to first performance and second performance are different, and therefore, the determining manner corresponding to the first performance may be identified by using a number "first", and the determining manner corresponding to the second performance may be identified by using a number "second", for distinguishing).

Optionally, the first device and the second device may agree on a numbering rule corresponding to the virtual identifier. For example, for a manner of determining a transmission parameter of a first downlink transmission after the indication information, a virtual identifier of the determining manner may be set to "first" or a "manner A", or the like. For another determining manner of a transmission parameter of a downlink transmission after the indication information, a virtual identifier of the determining manner may be set to "second" or a "manner B".

Optionally, the first device may feed back performance monitoring results of the multiple determining manners to the second device, where the monitoring results may include one or more of the following: performance of at least one determining manner in multiple determining manners; a determining manner corresponding to optimal performance in performance corresponding to multiple determining manners; a determining manner corresponding to performance higher than a threshold in the performance corresponding to the multiple determining manners; a determining manner corresponding to performance lower than the threshold in the performance corresponding to the multiple determining manners; and a determining manner recommended by the terminal device in the performance corresponding to the multiple determining manners. If the second device knows a specific determining manner (for example, a determining manner distinguished by using a number "first" or "second" as described above) corresponding to each virtual identifier, for example, AI-based, non-AI-based, or AI model-based, the second device may determine performance corresponding to each specific determining manner.

In another possible implementation, the second device may associate the first transmission and/or the second transmission with a downlink transmission of which a manner of determining a transmission parameter is known to the first device (that is, the manner of determining of the transmission parameter of the downlink transmission is known). In this case, the first device may determine, based on the known determining manner of the transmission parameter the downlink transmission, the specific determining manner of the transmission parameter of the first transmission and/or the second transmission, for example, the specific determining manner is AI-based, non-AI-based, or based on which AI model. For example, the downlink transmission of which the determining manner of the transmission parameter is known to the first device may be a downlink transmission used for a normal data transmission (for example, the normal data transmission may be a data transmission that does not need model monitoring). The first device knows the specific determining manner of the transmission parameter of the downlink transmission in another procedure. For example, in a procedure such as model selection, model switching, or model activation, the first device knows that the downlink transmission used for the normal data transmission is AI-based, non-AI-based, or based on which AI model. It may be understood that the foregoing implementation may also be used for an uplink transmission.

In another possible implementation, the second device may indicate, to the first device, a manner of determining a transmission parameter of at least one reference downlink transmission, and associate the first transmission and/or the second transmission with the at least one reference downlink transmission. In this case, the first device may know the specific determining manner of the transmission parameter of the first transmission and/or the second transmission, for example, the specific determining manner is AI-based, non-AI-based, or based on which AI model. It may be understood that the foregoing implementation may also be used for an uplink transmission.

In a possible implementation, the indication information may include indication information of the first transmission and indication information of the second transmission, to indicate that there is the association relationship between the first transmission and the second transmission, or indicate the first transmission and the second transmission that have the association relationship. Optionally, the indication information of the first transmission may be an index of the first transmission and/or time-frequency resource indication information of the first transmission. The indication information of the second transmission may be an index of the second transmission and/or time-frequency resource indication information of the second transmission. Optionally, when the first transmission is scheduled, the second transmission that has the association relationship with the scheduled first transmission may be indicated in scheduling signaling (for example, indication information in this embodiment of this application), for example, the indication information of the second transmission is included. It may be understood that the scheduling signaling includes the indication information of the first transmission. For a specific implementation of determining, based on the association relationship between the first transmission and the second transmission, performance corresponding to the manner of determining of the transmission parameter of the first transmission and/or the manner of determining of the transmission parameter of the second transmission, refer to the foregoing description.

In a possible implementation, the indication information may include a transmission moment of the first transmission and a transmission moment of the second transmission, to indicate that there is the association relationship between the first transmission and the second transmission, or indicate the first transmission and the second transmission that have the association relationship. Optionally, when the first transmission is scheduled, the second transmission that has the association relationship with the scheduled first transmission may be indicated in scheduling signaling (for example, the indication information in this embodiment of this application), for example, the transmission moment of the second transmission is included. It may be understood that the scheduling signaling further indicates the transmission moment of the first transmission.

In a possible implementation, the indication information in this embodiment of this application may be dynamic signaling, for example, may be DCI. In this case, the first transmission indicated by the DCI is a transmission scheduled by using the DCI, and may include the indication information (for example, the index) of the second transmission or indicate the transmission moment of the second transmission. In other words, the second transmission that has the association relationship with the first transmission may be indicated by using the DCI used to schedule the first transmission. In another possible implementation, the indication information in this embodiment of this application is a MAC CE. In another possible implementation, the indication information may be semi-static. For example, the indication information is higher layer signaling, for example, RRC signaling.

The indication information may be periodic, or may be aperiodic. For related descriptions, refer to the foregoing content.

Step 1002: The second device sends at least one transmission to the first device, where the at least one transmission includes the first transmission and/or the second transmission. Correspondingly, the first device receives the at least one transmission sent by the second device.

In this embodiment of this application, the first device may receive the at least one transmission on a time-frequency resource corresponding to the at least one transmission.

Step 1003: The first device determines, based on the indication information and the at least one transmission from the second device, performance corresponding to the manner of determining of the transmission parameter of the first transmission or the second transmission.

For a specific implementation of step 1003, refer to related descriptions in FIG. 7.

In a possible implementation, if the determining manners of the transmission parameter of the first transmission and the second transmission are different (for example, as described above, the association relationship is defined as: multiple transmissions having an association relationship have different determining manners of transmission parameters), the first device may separately determine the performance corresponding to the determining manners of the transmission parameters of the first transmission and the second transmission, and compare the performance corresponding to the manner of determining of the transmission parameter of the first transmission with the performance corresponding to the manner of determining of the transmission parameter of the second transmission, to determine which determining manner corresponds to better performance, so as to determine whether the determining manner needs to be switched, or whether an AI model needs to be replaced or updated. In a downlink transmission scenario, a terminal may alternatively send the determined performance to a network device, and the network device performs the foregoing determining and decision.

The procedure shown in FIG. 10 may be applied to a CSI feedback scenario, a CSI compression scenario, a CSI reconstruction scenario, a CSI prediction scenario, a beam prediction scenario, an SRS sending scenario, a phase-tracking reference signal (phase-tracking reference signal, PTS) sending scenario, and the like.

The procedure shown in FIG. 10 may be applied to a downlink transmission. In this case, the first device may be a terminal, the second device may be a network device, and the first transmission and the second transmission are downlink transmissions. The procedure shown in FIG. 10 may also be applied to an uplink transmission. In this case, the first device is a network device, the second device is a terminal, and the first transmission and the second transmission are uplink transmissions.

In the procedure shown in FIG. 10, the second device sends an association relationship between two or more transmissions to the first device by using the indication information, so that the first device can learn of determining manners of transmission parameters of the transmissions, and may determine corresponding performance for each determining manner based on a reception status of a corresponding transmission, thereby implementing model monitoring.

The following provides several application examples of the downlink transmission based on the procedure shown in FIG. 7 or FIG. 10. It may be understood that, for application of the uplink transmission, refer to an application example of the downlink transmission.

Based on the procedure shown in FIG. 7 or FIG. 10, an example in the CSI feedback scenario may be shown in FIG. 11. As shown in FIG. 11, in 1101, a network device (for example, a base station) sends indication information to a terminal device, where the indication information indicates CSI feedback manners of transmission parameters of one or more downlink transmissions, or indicates that a CSI feedback manner of a transmission parameter of a first downlink transmission is the same as a CSI feedback manner of a transmission parameter of a second downlink transmission. In 1102, the network device sends one or more downlink transmissions to the terminal device. In 1103, after receiving the one or more downlink transmissions, the terminal obtains the CSI feedback manners of the transmission parameters of the one or more downlink transmissions based on the indication information. The terminal determines, for each CSI feedback manner based on a reception status of a downlink transmission corresponding to the CSI feedback manner, performance corresponding to the CSI feedback manner, to obtain a model monitoring result. Further, the terminal may perform operations such as model switching and update based on the model monitoring result. Further, in 1104, the terminal may send the model monitoring result to the base station. For specific implementation details of the foregoing procedure, refer to related descriptions in FIG. 7 or FIG. 10.

Based on the procedure shown in FIG. 7 or FIG. 10, an example in the CSI prediction scenario may be shown in FIG. 12. As shown in FIG. 12, in 1201, a network device (for example, a base station) sends indication information to a terminal device, where the indication information indicates CSI prediction manners of transmission parameters of one or more downlink transmissions, or indicates that a CSI prediction manner of a transmission parameter of a first downlink transmission is the same as a CSI prediction manner of a second downlink transmission. In 1202, the network device sends one or more downlink transmissions to the terminal device. In 1203, after receiving the one or more downlink transmissions, the terminal obtains the CSI prediction manners of the transmission parameters of the one or more downlink transmissions based on the indication information. The terminal determines, for each CSI prediction manner based on a reception status of a downlink transmission corresponding to the CSI prediction manner, performance corresponding to the CSI prediction manner, to obtain a model monitoring result. Further, the terminal may perform operations such as model switching and update based on the model monitoring result. Further, in 1204, the terminal may send the model monitoring result to the base station. For specific implementation details of the foregoing procedure, refer to related descriptions in FIG. 7 or FIG. 10.

Based on the procedure shown in FIG. 7 or FIG. 10, an example in the beam prediction scenario may be shown in FIG. 13. As shown in FIG. 13, in 1301, a network device (for example, a base station) sends indication information to a terminal device, where the indication information indicates beam prediction manners of transmission parameters of one or more downlink transmissions, or indicates that a beam prediction manner of a transmission parameter of a first downlink transmission is the same as a beam prediction manner of a transmission parameter of a second downlink transmission. In 1302, the network device sends one or more downlink transmissions to the terminal device. In 1303, after receiving the one or more downlink transmissions, the terminal obtains the beam prediction manners of the transmission parameters of the one or more downlink transmissions based on the indication information. The terminal determines, for each beam prediction manner based on a reception status of a downlink transmission corresponding to the beam prediction manner, performance corresponding to the beam prediction manner, to obtain a model monitoring result. Further, the terminal may perform operations such as model switching and update based on the model monitoring result, or may send the model monitoring result to the base station. For specific implementation details of the foregoing procedure, refer to related descriptions in FIG. 7 or FIG. 10.

It may be understood that, although the foregoing embodiments of this application are described by using a final KPI model monitoring method as an example, a person skilled in the art may understand that, based on a same principle, the foregoing embodiments of this application may also be applied to an intermediate KPI model monitoring method.

It may be understood that, to implement the functions in the foregoing embodiments, the network device and the terminal include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

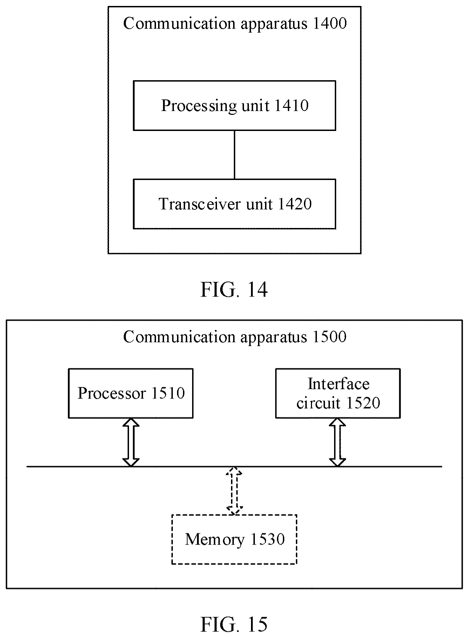

FIG. 14 and FIG. 15 are diagrams of structures of possible communication apparatuses according to embodiments of this application. These communication apparatuses may be configured to implement functions of the terminal or the network device in the foregoing method embodiments, and therefore can also implement beneficial effect of the foregoing method embodiments. In this embodiment of this application, the communication apparatus may be one of the terminals 120a to 120j shown in FIG. 1, or may be the base station 110a or 110b shown in FIG. 1, or may be a module (like a chip) used in the terminal or the base station.

As shown in FIG. 14, the communication apparatus 1400 includes a processing unit 1410 and a transceiver unit 1420. The communication apparatus 1400 is configured to implement a function of the first device or the second device in any one of the method embodiments shown in FIG. 7 and FIG. 10 to FIG. 13.

When the communication apparatus 1400 is configured to implement the function of the first device in the method embodiment shown in FIG. 7, the transceiver unit 1420 is configured to receive indication information from the second device, where the indication information indicates a manner of determining a transmission parameter of a first transmission, and the determining manner includes an AI-based determining manner or a non-AI-based determining manner. The processing unit 1410 is configured to determine, based on the indication information and at least one transmission from the second device, performance corresponding to the manner of determining of the transmission parameter of the first transmission, where the at least one transmission includes the first transmission.

When the communication apparatus 1400 is configured to implement the function of the second device in the method embodiment shown in FIG. 7, the transceiver unit 1420 is configured to: send indication information to the first device via the transceiver unit 1420, where the indication information indicates a manner of determining a transmission parameter of a first transmission, and the determining manner includes an AI-based determining manner or a non-AI-based determining manner; and send at least one piece of transmission to the first device via the transceiver unit 1420, where the at least one downlink transmission includes the first transmission.

When the communication apparatus 1400 is configured to implement the function of the first device in the method embodiment shown in FIG. 10, the transceiver unit 1420 is configured to receive indication information from the second device, where the indication information indicates that a manner of determining a transmission parameter of a first transmission is the same as a manner of determining a transmission parameter of a second transmission, and the determining manner includes an AI-based determining manner or a non-AI-based determining manner. The processing unit 1410 is configured to determine, based on the indication information and at least one transmission from the second device, performance corresponding to the manner of determining of the transmission parameter of the first transmission or the second transmission; and, where the at least one transmission includes the first transmission and/or the second transmission.

When the communication apparatus 1400 is configured to implement the function of the second device in the method embodiment shown in FIG. 10, the processing unit 1410 is configured to: send indication information to the first device via the transceiver unit 1420, where the indication information indicates that a manner of determining a transmission parameter of a first transmission is the same as a manner of determining a transmission parameter of a second transmission, and the determining manner includes an AI-based determining manner or a non-AI-based determining manner; and send at least one transmission to the first device via the transceiver unit 1420, where the at least one downlink transmission includes the first transmission and/or the second transmission.

For more detailed descriptions of the processing unit 1410 and the transceiver unit 1420, directly refer to the related descriptions in the method embodiments shown in FIG. 7 and FIG. 10. Details are not described herein again.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to: store instructions executed by the processor 1510, store input data required by the processor 1510 to run the instructions, or store data generated after the processor 1510 runs the instructions.

When the communication apparatus 1500 is configured to implement the method shown in FIG. 7 or FIG. 10, the processor 1510 is configured to perform a function of the processing unit 1410, and the interface circuit 1520 is configured to perform a function of the transceiver unit 1420.

When the communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by a network device to the terminal. Alternatively, the chip in the terminal sends information to another module (for example, the radio frequency module or the antenna) in the terminal, where the information is sent by the terminal to the network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, the radio frequency module or the antenna) in the network device, where the information is sent by the network device to the terminal. The network device module herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor, or may be any conventional processor.

This application further provides another example of the apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes a processor and a memory. As shown in FIG. 15, the communication apparatus 1500 includes a processor 1510 and a memory 1530. The processor 1510 is coupled to the memory 1530. The memory 1530 stores instructions. When the instructions stored in the memory 1530 are executed by the processor 1510, the communication apparatus 1500 performs the method performed by the network device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by software, hardware, firmware, or any combination thereof. When software is used to implement the embodiments, all or some of embodiments may be implemented in a form of computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and multiple means two or more. The term "and/or" describes an association relationship for describing associated objects and represents that three relationships may exist. For example, A and/or B may represent the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.   A communication method, applied to a first device, wherein the method comprises:

receiving indication information from a second device, wherein the indication information indicates a manner of determining a transmission parameter of a first transmission, or the indication information indicates that a manner of determining a transmission parameter of a first transmission is the same as a manner of determining a transmission parameter of a second transmission, and the manner of determining comprises an artificial intelligence AI-based determining manner or a non-AI-based determining manner; and

determining, based on the indication information and at least one transmission from the second device, performance corresponding to the manner of determining of the transmission parameter of the first transmission, wherein the at least one transmission comprises the first transmission and/or the second transmission.

2.   The method according to claim 1, wherein the AI-based determining manner comprises at least:
a first AI model-based determining manner and a second AI model-based determining manner.

3.   The method according to claim 2, wherein
the AI-based determining manner comprises one of the following:

an AI-based CSI feedback manner;
an AI-based CSI compression manner;
an AI-based CSI reconstruction manner;
an AI-based CSI prediction manner; and
an AI-based beam prediction manner; and
the non-AI-based determining manner comprises one of the following:

a non-AI-based CSI feedback manner;
a non-AI-based CSI compression manner;
a non-AI-based CSI reconstruction manner;
a non-AI-based CSI prediction manner; and
a non-AI-based beam prediction manner.

4.   The method according to any one of claims 1 to 3, wherein the first transmission comprises one transmission or multiple transmissions or a transmission within a first time period.

5.   The method according to any one of claims 1 to 4, wherein the receiving the indication information from the second device comprises:

receiving downlink control information from the second device, wherein the downlink control information indicates the manner of determining of the transmission parameter of the first transmission, and the first transmission is a transmission scheduled by using the downlink control information; or
receiving higher layer signaling from the second device, wherein the higher layer signaling indicates the manner of determining of the transmission parameter of the first transmission.

6. The method according to any one of claims 1 to 5, wherein the indication information indicates a first transmission pattern comprising a first determining manner corresponding to N transmissions, the N transmissions comprise the first transmission, the first determining manner is the manner of determining of the transmission parameter of the first transmission, and N is a positive integer; or
the indication information indicates a second transmission pattern comprising a first determining manner corresponding to the transmission within the first time period, the transmission within the first time period comprises the first transmission, and the first determining manner is the manner of determining of the transmission parameter of the first transmission.

7. The method according to any one of claims 1 to 6, wherein the indication information comprises index information of the manner of determining of the transmission parameter of the first transmission; or
the indication information comprises type information of the first transmission, and the manner of determining of the transmission parameter of the first transmission corresponds to a type of the first transmission.

8. The method according to any one of claims 1 to 7, wherein the indication information comprises indication information of the first transmission and indication information of the second transmission, or the indication information indicates transmission moments of the first transmission and the second transmission, or the indication information indicates that the manner of determining the transmission parameter of the first transmission is the same as the manner of determining the transmission parameter of the second transmission.

9. The method according to claim 8, wherein the indication information of the first transmission comprises an index of the first transmission and/or time-frequency resource indication information of the first transmission; and the indication information of the second transmission comprises an index of the second transmission and/or time-frequency resource indication information of the second transmission.

10. The method according to any one of claims 1 to 9, wherein the determining, based on the indication information and the at least one transmission from the second device, the performance corresponding to the manner of determining of the transmission parameter of the first transmission comprises:
within each period after the indication information is received, determining, based on the indication information and the at least one transmission from the second device within the period, the performance corresponding to the manner of determining of the transmission parameter of the first transmission.

11. The method according to any one of claims 1 to 10, further comprising:
sending first information to the second device, wherein the first information comprises the performance, or the first information indicates one or more of the following:

performance of at least one determining manner in multiple determining manners;
a determining manner corresponding to optimal performance in performance corresponding to multiple determining manners;
a determining manner corresponding to performance higher than a threshold in the performance corresponding to the multiple determining manners;
a determining manner corresponding to performance lower than the threshold in the performance corresponding to the multiple determining manners; or
a determining manner recommended by the first device in the performance corresponding to the multiple determining manners, wherein
the multiple determining manners comprise a manner of determining a transmission parameter of each of the at least one transmission sent by the second device.

12. The method according to any one of claims 1 to 11, wherein the first device is a terminal device, the second device is a network device, and the first transmission is a downlink transmission; or

the first device is a network device, the second device is a terminal device, and the first transmission is an uplink transmission.

13. A communication method, applied to a second device, wherein the method comprises:

sending indication information to a first device, wherein the indication information indicates a manner of determining a transmission parameter of a first transmission, or the indication information indicates that a manner of determining a transmission parameter of a first transmission is the same as a manner of determining a transmission parameter of a second transmission, and the manner of determining comprises an artificial intelligence AI-based determining manner or a non-AI-based determining manner; and
sending at least one transmission to the first device, wherein the at least one transmission comprises the first transmission and/or the second transmission.

14. The method according to claim 13, wherein the AI-based determining manner comprises at least:
a first AI model-based determining manner and a second AI model-based determining manner.

15. The method according to claim 14, wherein
the AI-based determining manner comprises one of the following:

an AI-based CSI feedback manner;
an AI-based CSI compression manner;
an AI-based CSI reconstruction manner;
an AI-based CSI prediction manner; and
an AI-based beam prediction manner; and
the non-AI-based determining manner comprises one of the following:

a non-AI-based CSI feedback manner;
a non-AI-based CSI compression manner;
a non-AI-based CSI reconstruction manner;
a non-AI-based CSI prediction manner; and
a non-AI-based beam prediction manner.

16. The method according to any one of claims 13 to 15, wherein the first transmission comprises one transmission or multiple transmissions or a transmission within a first time period.

17. The method according to any one of claims 13 to 16, wherein the sending the indication information to the first device comprises: sending downlink control information to the first device, wherein the downlink control information indicates the manner of determining of the transmission parameter of the first transmission, and the first transmission is a transmission scheduled by using the downlink control information; or sending higher layer signaling to the first device, wherein the higher layer signaling indicates the manner of determining of the transmission parameter of the first transmission.

18. The method according to any one of claims 13 to 17, wherein the indication information indicates a first transmission pattern comprising a first determining manner corresponding to N transmissions, the N transmissions comprise the first transmission, the first determining manner is the manner of determining of the transmission parameter of the first transmission, and N is a positive integer; or
the indication information indicates a second transmission pattern comprising a first determining manner corresponding to the transmission within the first time period, the transmission within the first time period comprises the first transmission, and the first determining manner is the manner of determining of the transmission parameter of the first transmission.

19. The method according to any one of claims 13 to 18, wherein the indication information comprises index information of the manner of determining of the transmission parameter of the first transmission; or the indication information comprises type information of the first transmission, and the manner of determining of the transmission parameter of the first transmission corresponds to a type of the first transmission.

20. The method according to any one of claims 13 to 19, wherein the indication information comprises indication information of the first transmission and indication information of the second transmission, or the indication information indicates transmission moments of the first transmission and the second transmission.

21. The method according to claim 20, wherein the indication information of the first transmission comprises an index of the first transmission and/or time-frequency resource indication information of the first transmission; and the indication information of the second transmission comprises an index of the second transmission and/or time-frequency resource indication information of the second transmission.

22. The method according to any one of claims 13 to 21, wherein the determining, based on the indication information and the at least one transmission from the second device, the performance corresponding to the manner of determining of the transmission parameter of the first transmission comprises:
within each period after the indication information is received, determining, based on the indication information and the at least one transmission from the second device within the period, the performance corresponding to the manner of determining of the transmission parameter of the first transmission.

23. The method according to any one of claims 13 to 22, further comprising:
receiving first information from the first device, wherein the first information comprises the performance that corresponds to the manner of determining of the transmission parameter of the first transmission and that is determined by the first device based on the indication information and the at least one transmission sent by the second device, or the first information indicates one or more of the following:

performance of at least one determining manner in multiple determining manners;
a determining manner corresponding to optimal performance in performance corresponding to multiple determining manners;
a determining manner corresponding to performance higher than a threshold in the performance corresponding to the multiple determining manners;
a determining manner corresponding to performance lower than the threshold in the performance corresponding to the multiple determining manners; and
a determining manner recommended by the terminal device in the performance corresponding to the multiple determining manners, wherein
the multiple determining manners comprise a manner of determining a transmission parameter of each of the at least one transmission sent by the second device.

24. The method according to any one of claims 13 to 23, wherein the first device is a terminal device, the second device is a network device, and the first transmission is a downlink transmission; or
the first device is a network device, the second device is a terminal device, and the first transmission is an uplink transmission.

25. A communication method, comprising:

sending, by a second device, indication information to a first device, wherein the indication information indicates a manner of determining a transmission parameter of a first transmission, or the indication information indicates that a manner of determining a transmission parameter of a first transmission is the same as a manner of determining a transmission parameter of a second transmission;
sending, by the second device, at least one transmission to the first device, wherein the at least one transmission comprises the first transmission and/or the second transmission; and
determining, by the first device based on the indication information and the at least one transmission from the second device, performance corresponding to the manner of determining of the transmission parameter of the first transmission.

26. A communication system, comprising a first device configured to perform the method according to any one of claims 1 to 12, and a second device configured to perform the method according to any one of claims 13 to 24.

27. A communication apparatus, comprising a unit or module configured to implement the method according to any one of claims 1 to 12, or comprising a unit or module configured to implement the method according to any one of claims 13 to 24.

28. A communication apparatus, comprising one or more processors and one or more memories, wherein the one or more memories store one or more programs, and when the program is executed by the one or more processors, the communication apparatus is caused to perform the method according to any one of claims 1 to 12 or the method according to any one of claims 13 to 24.

29. A chip system, wherein the chip system comprises at least one chip and a memory, and the at least one chip is configured to read and execute a program stored in the memory, to implement the method according to any one of claims 1 to 12 or the method according to any one of claims 13 to 24.

30. A readable storage medium, wherein the readable storage medium comprises a program, and when the program is run on an apparatus, the apparatus is caused to perform the method according to any one of claims 1 to 12 or the method according to any one of claims 13 to 24.

31. A program product, wherein when the program product runs on an apparatus, the apparatus is caused to perform the method according to any one of claims 1 to 12 or the method according to any one of claims 13 to 24.

FIG. 1

FIG. 2

FIG. 3

FIG. 4

Terminal
device 120

Terminal
device 130

Access network
device 110

FIG. 5a

AI entity
240

Terminal
device 220

Terminal
device 230

Access network
device 210

FIG. 5b

Original
CSI

CSI
generator

Quantized
CSI

CSI
reconstructor

Restored
CSI

FIG. 6

```
┌──────────────┐                                    ┌──────────────┐
│ Second device│                                    │ First device │
└──────┬───────┘                                    └──────┬───────┘
       │                                                   │
       │  701: Indication information, indicating a manner │
       │  of determining a transmission parameter of a first│
       │  transmission, and the determining manner includes│
       │  an AI-based determining manner or a non-AI-      │
       │  based determining manner                         │
       │──────────────────────────────────────────────────▶│
       │                                                   │
       │  702: At least one transmission, where the at least│
       │  one transmission includes the first transmission │
       │──────────────────────────────────────────────────▶│
```

703: Determine, based on the indication information and the at least one transmission from the second device, performance corresponding to the manner of determining the transmission parameter of the first transmission

FIG. 7

| N1 downlink transmissions, where a manner of determining a transmission parameter is CSI feedback manner 1 | N2 downlink transmissions, where a manner of determining a transmission parameter is CSI feedback manner 2 | N3 downlink transmissions, where a manner of determining a transmission parameter is CSI feedback manner 3 |

FIG. 8a

Downlink transmissions within M1 time, where a manner of determining a transmission parameter is CSI feedback manner 1

Downlink transmissions within M2 time, where a manner of determining a transmission parameter is CSI feedback manner 2

Downlink transmissions within M3 time, where a manner of determining a transmission parameter is CSI feedback manner 3

FIG. 8b

$\leftarrow \Delta t1 \rightarrow$    Effective time    Time

t3    t1

A moment t3 is a reference moment

FIG. 9a

$\leftarrow \Delta t1 \rightarrow$    Effective time    $\leftarrow \Delta t2 \rightarrow$    Time

t3    t1    t4    t2

A moment t3 is a reference moment

A moment t4 is a reference moment

FIG. 9b

Effective time Δt

Time

t1

t2

FIG. 9c

Second device

First device

1001: Indication information, indicating that a manner of determining a transmission parameter of a first transmission is the same as a manner of determining a transmission parameter of a second transmission, and the determining manner includes an AI-based determining manner or a non-AI-based determining manner

1002: At least one transmission, where the at least one transmission includes the first transmission and/or the second transmission

1003: Determine, based on the indication information and the at least one transmission from the second device, performance corresponding to the manner of determining the transmission parameter of the first transmission or the second transmission

FIG. 10

| Network device | | Terminal |
|---|---|---|

1101: Indication information, indicating CSI feedback manners of transmission parameters of one or more downlink transmissions, or indicating that a CSI feedback manner of a transmission parameter of a first downlink transmission is the same as a CSI feedback manner of a transmission parameter of a second downlink transmission

1102: One or more downlink transmissions

1103: Determine, for each CSI feedback manner based on the indication information and a reception status of a downlink transmission corresponding to the CSI feedback manner, performance corresponding to the CSI feedback manner

1104: Model monitoring result

FIG. 11

FIG. 12

```
┌─────────────────┐                                  ┌──────────┐
│ Network device  │                                  │ Terminal │
└─────────────────┘                                  └──────────┘
```

1301: Indication information, indicating beam prediction manners of transmission parameters of one or more downlink transmissions, or indicating that a beam prediction manner of a transmission parameter of a first downlink transmission is the same as a beam prediction manner of a transmission parameter of a second downlink transmission

1302: One or more downlink transmissions

1303: Determine, for each beam prediction manner based on the indication information and a reception status of a downlink transmission corresponding to the beam prediction manner, performance corresponding to the beam prediction manner

1304: Model monitoring result

FIG. 13

Communication apparatus 1400

Processing unit 1410

Transceiver unit 1420

FIG. 14

Communication apparatus 1500

Processor 1510

Interface
circuit 1520

Memory 1530

FIG. 15

## INTERNATIONAL SEARCH REPORT

| International application No. |
|---|
| **PCT/CN2024/076089** |

| A. | CLASSIFICATION OF SUBJECT MATTER |
|---|---|
| | H04W 24/10(2009.01)i |

According to International Patent Classification (IPC) or to both national classification and IPC

| B. | FIELDS SEARCHED |
|---|---|

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

CNTXT, ENTXTC, DWPI, CNKI: AI, model, CSI, feedback, 性能, 传输参数, 反馈, 方式, 非AI, 监测, 模型, 确定方式, 人工智能, 输出

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2023012359 A1 (TELEFONAKTIEBOLAGET LM ERICSSON (PUBL)) 09 February 2023 (2023-02-09) description, page 23, lines 26-35 | 1-31 |
| A | WO 2022133866 A1 (HUAWEI TECHNOLOGIES CO., LTD.) 30 June 2022 (2022-06-30) entire document | 1-31 |
| A | WO 2022086949 A1 (IDAC HOLDINGS, INC.) 28 April 2022 (2022-04-28) entire document | 1-31 |
| A | CN 115280833 A (BEIJING XIAOMI MOBILE SOFTWARE CO., LTD.) 01 November 2022 (2022-11-01) entire document | 1-31 |
| A | CN 115580877 A (CHINA ACADEMY OF INFORMATION AND COMMUNICATIONS TECHNOLOGY) 06 January 2023 (2023-01-06) entire document | 1-31 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 April 2024** | **26 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/076089**

| Patent document cited in search report | | | Publication date (day/month/year) | Patent family member(s) | | | Publication date (day/month/year) |
|---|---|---|---|---|---|---|---|
| WO | 2023012359 | A1 | 09 February 2023 | None | | | |
| WO | 2022133866 | A1 | 30 June 2022 | EP | 4233303 | A1 | 30 August 2023 |
| | | | | US | 2023284139 | A1 | 07 September 2023 |
| | | | | CN | 116686278 | A | 01 September 2023 |
| WO | 2022086949 | A1 | 28 April 2022 | EP | 4232958 | A1 | 30 August 2023 |
| | | | | US | 2023409963 | A1 | 21 December 2023 |
| | | | | CN | 116635870 | A | 22 August 2023 |
| | | | | IN | 202317028896 | A | 21 December 2023 |
| CN | 115280833 | A | 01 November 2022 | WO | 2023240573 | A1 | 21 December 2023 |
| CN | 115580877 | A | 06 January 2023 | None | | | |

Form PCT/ISA/210 (patent family annex) (July 2022)

**EP 4 661 479 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310156244